# EUROPÄISCHE PATENTSCHRIFT

(11) **EP 0 134 033 B1**
(45) Veröffentlichungstag und Bekanntmachung des Hinweises auf die Patenterteilung: **08.07.1987**
(21) Anmeldenummer: 84109630.8
(22) Anmeldetag: 13.08.1984
(51) Int. Cl.: C09B 62/002, C09B 21/00, D06P 3/66, D06P 3/10

(54) **Benzthiazinophenoxazin-Farbstoffe**
Benzthiazinophenoxazine dyestuffs
Colorants benzothiazinophénoxazines

(30) Priorität: 24.08.1983 DE 3330547
(43) Veröffentlichungstag der Anmeldung: 13.03.1985
(73) Patentinhaber: BAYER AG, 51368 Leverkusen (DE)
(72) Erfinder: Harms, Wolfgang, Dr., D-5090 Leverkusen (DE); Franke, Günter, Dr., D-5653 Leichlingen (DE); Wunderlich, Klaus, Dr., D-5090 Leverkusen (DE)

## Beschreibung

Aus der DE-A-2 503 611 sind 6,13-Dichlor-triphendioxazin-Reaktivfarbstoffe bekannt, die eine über Stickstoff gebundene faserreaktive Gruppe aufweisen und die sich zum Färben von Cellulosetextilmaterialien in rötlich-blauen Farbtönen eignen.

Gegenstand der vorliegenden Erfindung sind nun Farbstoffe der Formeln 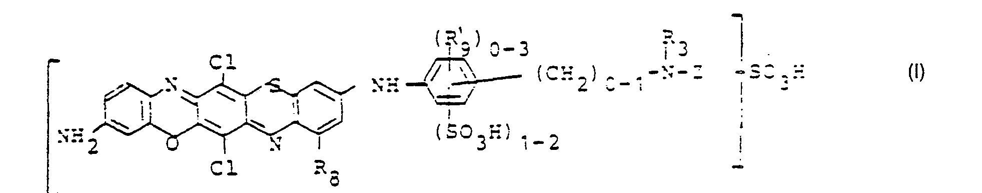 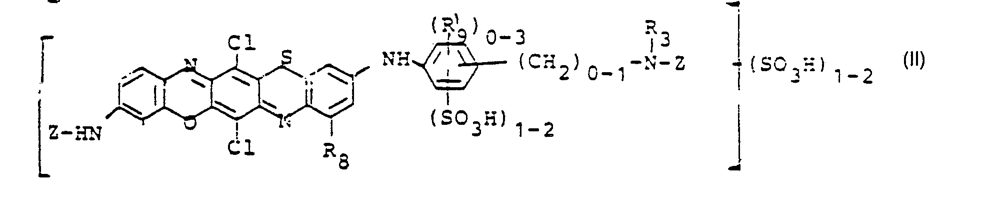 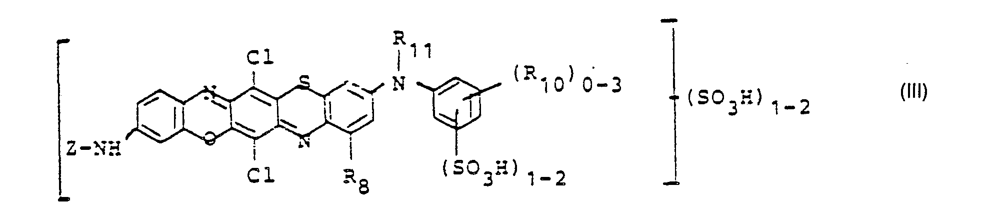 worin
Z = faserreaktiver Rest
R₃ = H, Alkyl
R₈ = H, C₁-C₄-Alkyl, C₁-C₄-Alkoxy, F, Cl, Br
R'₉ = H, CH₃
R₁₀ = C₁-C₄-Alkyl, C₁-C₄-Alkoxy, C₁-C₄-Alkylcarbonylamino, F, Cl, Br
R₁₁ = H, C₁-C₄-Alkyl, gegebenenfalls substituiert durch OH oder OS0₃H

sowie deren Verwendung zum Färben und Bedrucken von hydroxylgruppenhaltigen und amidgruppenhaltigen natürlichen und synthetischen Materialien.

Die Alkylreste sind vorzugsweise C₁-C₄-Alkylreste und können substituiert sein, beispielsweise durch OH, OSO₃H, SO₃H. Die Alkoxyreste können gegebenenfalls substituiert sein, beispielsweise durch Hydroxy.

Faserreaktive Reste = Reste, die unter Färbebedingungen mit hydroxylgruppen- oder amidgruppenhaltigen Materialien unter Ausbildung einer kovalenten Bindung reagieren.

Faserreaktive Reste sind beispielsweise solche, die mindestens einen abspaltbaren Substituenten an einen heterocyclischen oder an einen aliphatischen Rest gebunden enthalten, insbesondere solche, die mindestens einen reaktiven Substituenten an einen 5- oder 6-gliedrigen heterocylischen Ring gebunden enthalten, wie an einen Monazin-, Diazin-, Triazin-, z. B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinolin-, Chinazolin-, Chinoxalin-, Acridin-, Phenazin- und Phenanthridin-Ringsystem ; die 5- oder 6- gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6- gliedrige carbocyclische Ringe ankondensiert enthalten können.

Unter den reaktiven Substituenten am Heterocyclus sind beispielsweise zu erwähnen :
Halogen (CI, Br oder F), Ammonium, einschließlich Hydrazinium, Sulfonium, Sulfonyl, Azido-(N₃), Rhodanido, Thio, Thiolether, Oxyether, Sulfinsäure und Sulfonsäure. Im einzelnen sind beispielsweise zu nennen :
   Mono- oder Dihalogen-symmetrische-triazinylreste, z. B. 2,4-Dichlortriazinyl-6-, 2-Amino-4-chlor- triazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino-oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-(2',4'-,2',5'- oder 3',4'-Disulfophenyl)-amino-4-chlor-triazinyl-6, 2-Alkoxy-4-chlortriazinyl-6-, wie 2-Methoxy- oder Ethoxy-4-chlortriazinyl-6-, 2-(Phenyl-sulfonylmethoxy)-4- chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor- triazinyl-6-, 2-Alkylmercapto- oder 2-Arylmercapto- oder 2-(substituiertes Aryl)-mercapto-4-chlortriazinyl-6-, wie 2-β-Hydroxyethylmercapto-4-chlortriazinyl-6-, 2-Phenylmercapto-4-chlortriazinyl-6-, 3-(4'-Methylphenyl)-mercapto-4-chlortriazinyl-6-, 2-(2',4'-Dinitro)-phenyl-mercapto-4-chlortriazinyl-6-, 2-Methyl-4- chlortriazinyl-6-, 2-Phenyl-4-chlor-triazinyl-6, 2,4-Difluortriazinyl-6, Monofluortriazinylreste, die durch Amino-, Alkylamino-, Aralkylamino, Arylaminogruppen substituiert sind, wobei Alkyl, insbesondere gegebenenfalls substituiertes C₁₋C₄-Alkyl, Aralkyl, insbesondere gegebenenfalls substituiertes Phenyl-C₁-C₄-Alkyl und Aryl, insbesondere gegebenenfalls durch Sulfo-, Alkyl-, insbesondere C₁-C₄-Alkyl, Alkoxy-, insbesondere C₁-C₄-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methyfamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-ß-Methoxy-ethylamino-4-fluor- triazinyl-6, 2-ß-Hydroxy-ethylamino-4-fluor-triazinyl-6, 2-Di-(ß-hydroxyethylamino)-4-fluor-triazinyl-6, 2-ß-Sulfoethylamino-4-fluor-triazinyl-6,
   2-ß-Sulfoethyl-methylamino-4-fluor-triazinyl-6,
   2-Carboxymethylamino-4-fluor-triazinyl-6,
   2-ß-Cyanethylamino-4-fluor-triazinyl-6,
   2-Benzylamino-4-fluor-triazinyl-6,
   2-ß-Phenylethylamino-4-fluor-triazinyl-6,
   2-Benzyl-methylamino-4-fluor-triazinyl-6,
   2-(x-Sulfo-benzyl)-amino-4-fluor-triazinyl-6,
   2-Cyclohexylamino-4-fluor-triazinyl-6,
   2-(o-,m-,p-Methylphenyl)-amino-4-fluor-triazinyl-6,
   2-(o-,m-,p-Sulfophenyl)-amino-4-fluor-triazinyl-6,
   2-(2',5'-Disulfophenyl)-amino-4-fluor-triazinyl-6,
   2-(o-,m-,p-Chlorphenyl)-amino-4-fluor-triazinyl-6,
   2-(o-,m-,p-Methoxyphenyl)-4-fluor-triazinyl-6,
   2-(2'-Methyl-4'-sulfophenyl)-amino-4-fluor-triazinyl-6,
   2-(2'-Methyl-5'-sulfophenyl)-amino-4-fluor-triazinyl-6,
   2-(2'-Chlor-4'-sulfophenyl)-amino-4-fluor-triazinyl-6,
   2-(2'-Chlor-5'-sulfophenyl)-amino-4-fluor-triazinyl-6,
   2-(2'-Methoxy-4'-sulfophenyl)-amino-4-fluor-triazinyl-6,
   2-(o-,m-,p-Carboxyphenyl)-amino-4-fluor-triazinyl-6,
   2-(2',4'-Disulfophenyl)-amino-4-fluor-triazinyl-6,
   2-(3',5'-Disulfophenyl)-amino-4-fluor-triazinyl-6,
   2-(2'-Carboxy-4-sulfophenyl)-amino-4-fluor-triazinyl-6,
   2-(6'-Sulfonaphthyl-(2'))-amino-4-fluor-triazinyl-6,
   2-(4',8'-Disulfonaphthyl-(2'))-amino-4-fluor-triazinyl-6,
   2-(6',8'-Disulfonaphthyl-(2'))-amino-4-fluor-triazinyl-6,
   2-(N-Methylphenyl)-amino-4-fluor-triazinyl-6,
   2-(N-ethylphenyl)-amino-4-fluor-triazinyl-6,
   2-(N-ß-Hydroxyethylphenyl)-amino-4-fluor-triazinyl-6,
   2-(N-iso-Propylphenyl)-amino-4-fluor-triazinyl-6,
   2-Morpholino-4-fluor-triazinyl-6,
   2-Piperidino-4-fluor-triazinyl-6,
   2-(4',6',8'-Trisulfonaphthyl-(2'))-4-fluor-triazinyl-6,
   2-(3',6',8'-Trisulfonaphthyl-(2'))-4-fluor-triazinyl-6,
   2-(3',6'-Disulfanaphthyl-(1'))-4-fluor-triazinyl-6,
   2-Chlor- oder 2-Fluor-4-(4'-β-sulfatoethylsulfonyl-phenyl-amino)-6-triazinyl ; 2-Chlor- oder 2-Fluor-4-(3'-β-sulfatoethylsulfonyl-phenylamino)-6-triazinyl ; 2-Chlor- und 2-Fluor-4-(β-(β'-sulfatoethylsulfonyl)-ethylamino)-6-triazinyl ; 2-Fluor-4-bis-(β-(β'-chlorethylsulfonyl)-ethyt)-amino-6-triazinyl.

Die Halogentriazinylreste können auch mit einem zweiten Halogentriazinylrest verknüpft sein. Beispiele für derartige Reste sind die folgenden :

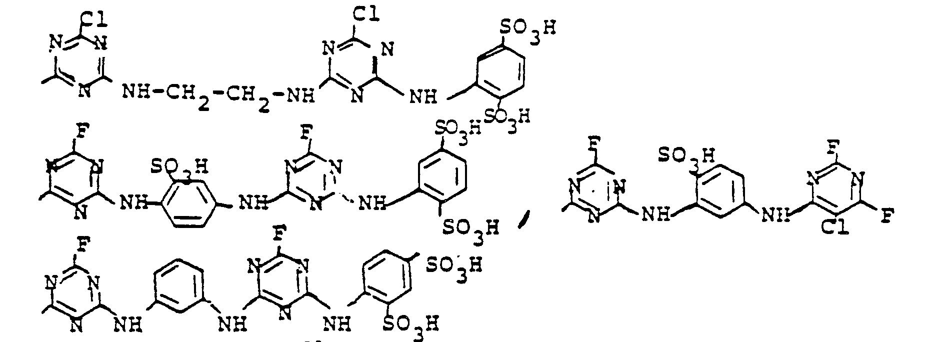

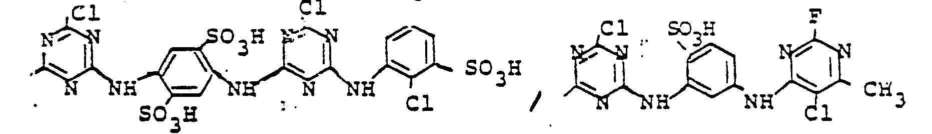

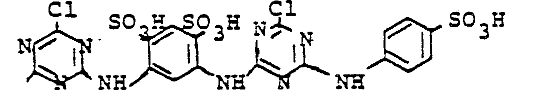

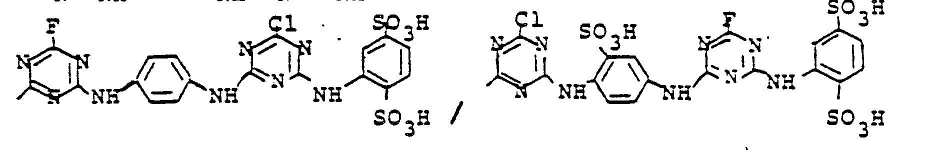

Weiterhin können die reaktiven Halogenatome in den oben genannten 2-Halogen-4-substituierten- triazinyl-Resten unter Bildung quartärer Salze noch gegen tertiäre Basen wie Trimethylamin, Triethylamin, Dimethyl-ß-hydroxyethylamin, Triethanolamin, N-N-Dimethylhydrazin, Pyridin, a-,y-Picolin, Nicotinsäure oder Isonicotinsäure ausgetauscht werden.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxa-Iin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder carbonyl-, β-(4',5'-Dichlorpyridazon-6'-yl-1')-ethylcarbonyl-, N-Methyl-N-(2,4-dichlortriazinyl-6-)-carbamyl-, N-Methyl-N-(2-methylamino-4-chlortriazinyl-6)-carbamyl-, N-Methyl-N-2-dimethylamino-4-chlortriazinyl-6)-carbamyl-, N-Methyl- oder N-Ethyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchi- noxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrirnidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -S-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlor-pyrimidin-4-yl ; 2-Methyl-4-fluor-5-methylsulfonylpyrimidinyl-6 ; 2,6-Difluor-5-methylsulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6- carbo- methoxy-4-pyrimidinyl-, 2,6-Difluor-5-trifluormethyl-4-pyrimidinyl ; sulfonylgruppenhaltige Triazinreste, wie 2,4-Bis-(phenylsulfonyl)-triazinyl-6-, 2-(3'-Carboxyphenyl)- sulfonyl-4-chlortriazinyl-6-, 2-(3'-Sulfophenyl)-sulfonyl-4-chlortriazinyl-6-, 2,4-Bis-(3'-carboxyphenylsulfonyl-)- triazinyl-6 ; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2.6-Bis- methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfo- nyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6- chlormethyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyi-4-, 2-Carboxymethylsulfonyl-5-chlor-6-methyl-pyrimidinyl-4-, 2-Methylsulfonyl-6- chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl- ; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethylhydrazi- nium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-ami- notriazinyl-6-, ferner 4-Phenylamino- oder 4-(sulfophenylamino)-triazinyl-S-Reste, die in 2-Stellung über eine Stickstoffbindung das 1,4-Bisazabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-sulfophenyl)-ami- notriazinyl-6- sowie entsprechende 2-Oniumtriazinyl-6-Reste, die in 4-Stellung durch Alkylamino-, wie Methylamino-, Ethylamino- oder β-Hydroxyethylamino-, oder Alkoxy-, wie Methoxy- oder Ethoxy-, oder Aroxy-, wie Phenoxy- oder Sulfophenoxy-Gruppen substituiert sind ; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl-oder -5- oder -6-sulfonyl-, wie 2-Methylsulfonyl- oder 2-Ethyisulfonylbenzthiazol-5- oder -6-sulfonyl- oder - carbonyl-, 2-Phenylsulfonyl- benzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder - 6-carbonyl- oder -sulfonyl-, 2-Chlor-1-methylbenzimidazol-S- oder -6-carbonyl- oder-sulfonyl-, 2-Chlor-4-methyl-thiazol-(1,3)-5-carbonyl- oder -4- oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichlor-acryloyl-, wie ―CO―CH=CH―Cl, ―CO―CCl=CH₂, ―CO―CCl=CH―CH₃, ferner ―CO―CCl=CH―COOH, ―CO―CH=CCl―COOH. β-Chlorpropionyl-, 3-Phenylsulfonylpropionyl-, 3-Methylsulfonylpropionyl-, β-Sulfato-ethylaminosulfonyl-, Vinylsulfonyl-, β-Chlorethylsulfonyl-, β-Sulfatoethylsulfonyl-, β-Methylsulfonylethylsulfonyl-, β-Phenylsulfonylethylsulfonyl-, 2-Fluor-2=chlor-3,3-diflu- orcyclobutan-1-carbonyl-, 2,2,3,3-Tetrafluorcyclobutan-carbonyl-1- oder sulfonyl-l-, β-(2,2,3,3-Tetrafluorcyclobutyl-1)-acryloyl-, α- oder β-Bromacryloyl-, α- oder β-Alkyl- oder Arylsulfonyl-acryloyl-Gruppe, wie α- oder β-Methylsulfonylacryloyl, α, β-Dichlor- und Dibrompropionyl.

Die Farbstoffe der Formeln I-III erhält man beispielsweise durch Umsetzung der entsprechenden Farbstoffe mit Z = H mit Reaktivkomponenten der Formel 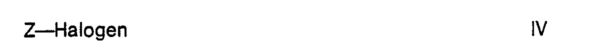 worin Z die oben aufgeführte Bedeutung hat und Halogen F, CI oder Br ist, und, falls die Ausgangsverbindungen keine Sulfogruppen aufweisen, gegebenenfalls anschließende Sulfonierung.

Die Kondensation mit den Reaktivkomponenten IV wird entweder in wäßrigem oder wäßrigorganischem Medium in Abhängigkeit von der eingesetzten Reaktivkomponente bei Temperaturen von 0-80 °C und pH-Werten von 3-9 in Gegenwart alkalischer Kondensationsmittel, wie wässriger Alkalihydrogencarbonat-, Alkalicarbonat-, Alkalihydroxid-, Alkalihydrogenphosphat-, Dialkalihydrogen-phosphat-oder Trialkaliphosphat-Lösung durchgeführt, oder aber die Kondensation wird in aprotischen organischen Lösungsmitteln, wie Toluol, Halogenbenzolen, Nitrobenzol, Dimethylformamid, N-Methylpyrrolidon, Tetramethylensulfon, Dimethylsulfoxid, Aceton, Methylethylketon, gegebenenfalls in Gegenwart aprotischer organischer Basen, wie Trialkylamin, N,N-Dialkylanilin, Pyridin oder Alkylpyridinen, bei Temperaturen von 0-80 °C vollzogen.

Die Einführung von wasserlöslichmachenden Sulfonsäuregruppen kann durch Sulfonierung vor und/oder nach der Einführung der faserreaktiven Reste Z und/oder durch Kondensation mit bereits Sulfonsäuregruppen oder andere wasserlöslichmachende Gruppen, wie Sulfato oder Carboxyl enthaltende Reaktivkomponenten erfolgen. Ist Z = Dihalogentriazinyl, so kann in den entstehenden Dihalogentriazinylfarbstoffen der Formel I-III je Triazinsystem ein weiteres Halogenatom ausgetauscht werden, bevorzugt gegen solche Reste, die wasserlöslichmachende Gruppen, wie SO₃H, OSO₃H, COOH, enthalten.

Die Ausgangsverbindungen mit Z = H lassen sich nach bekannten Verfahren herstellen (vergleiche beispielsweise Deutsche Patentschrift 639 207 ; Friedlaender, Fortschritte der Teerfarbenfabrikation Band 23, S. 717, 1936) und zwar durch Kondensation von gegebenenfalls substituierten Phenoxazinonen der Formel 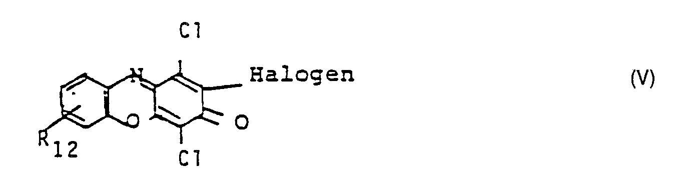 worin
R₁₂ = H, N0₂, Amino,
Halogen = F, Cl, Br,

mit gegebenenfalls substituierten 2-Aminothiophenolen der Formel 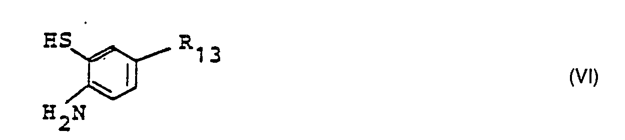 zu den Benzothiazinophenoxazinen der Formel 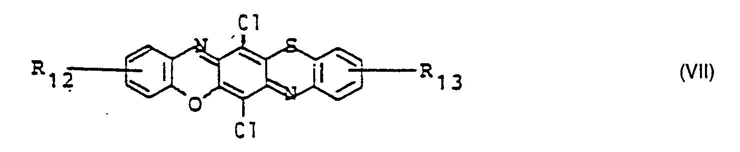 worin 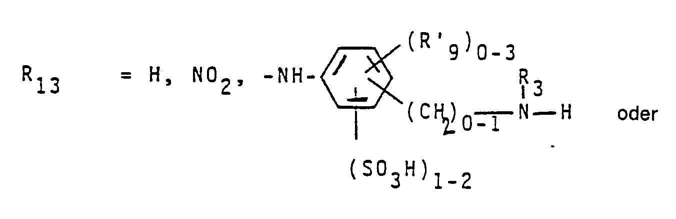 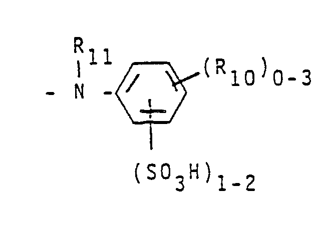 und mindestens einer der Substituenten R₁₂ oder R₁₃ N0₂ oder gegebenenfalls substituiertes Amino darstellt,
und erforderlichenfalls anschließende Umwandlung des Restes R₁₂ und/oder R,₃ in den Rest NH₂ bzw.

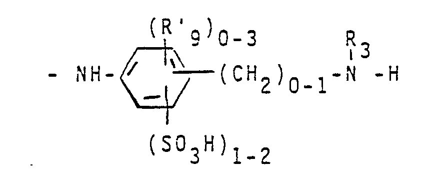

Die Umwandlung kann beispielsweise durch die Reduktion von Nitrogruppen oder Kondensation von VII mit N-Methylolacylamiden und gegebenenfalls nachfolgende Verseifung erfolgen.

Eine Variante besteht darin, Phenothiazinone der Formel 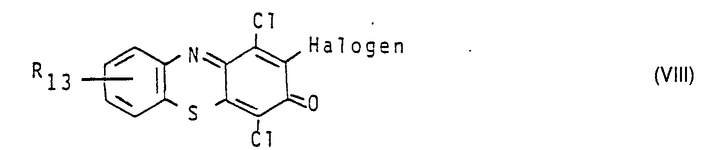 mit gegebenenfalls substituierten 2-Aminophenolen der Formel 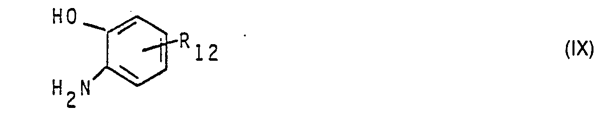 zu Verbindungen der Formel VII zu kondensieren und diese, wie oben beschrieben, umzuwandeln.

Phenoxazinone der Formel V können beispielsweise hergestellt werden durch Kondensation von entsprechend substituierten 1,4-Berizochinonen, bevorzugt von substituierten 2,5-Dihalogen-1,4-benzochinonen, mit entsprechend substituierten 2-Aminophenolen nach an sich bekannten Methoden, (vergleiche DE-PS 620 346 ; Friedlaender, Fortschritte der Teerfarbenfabrikation Band 22, Seite 754 f., 1935 ; Mital, Jain, Journal of the Chemical Society (London), 1971, Seite 1876).

Die Herstellung einer großen Zahl substituierter 2-Aminothiophenole der Formel VI ist ebenfalls aus der Literatur bekannt.

Als spezielle Methode zur Herstellung arylaminosubstituierter 2-Aminothiophenole sei insbesondere die in den Deutschen Patentschriften 445 270, 487849 und 491 224 ; Friedlaender, Fortschritte der Teerfarbenfabrikation Band 15, Seite 611, 1925-1927 ; Band 16, Seite 465 und 470, 1927-1929 beschriebene Kondensation von Arylen-1,2-thiazthioniumchloriden (« Herz-Verbindungen") mit aromatischen Aminen und anschließender Aufspaltung der Thiazthioniumfunktion unter Bildung der NH₂- und SH-Gruppe erwähnt.

Die in den Farbstoffen der Formeln I-III in der Klammer angegebenen Sulfogruppen werden vorzugsweise durch Nachsulfierung eingeführt. Die angegebenen Zahlenwerte sind Durchschnittswerte.

Die neuen Farbstoffe im Nuancenbereich violett bis blau sind wertvolle Produkte, die sich durch hohe Farbstärken auszeichnen. Sie eignen sich in dispergierter oder gelöster Form für die verschiedensten Anwendungszwecke.

In Form wasserlöslicher Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfarbstoffe, so werden die genannten Materialien nach den für Reaktivfarbstoffe allgemein bekannten und üblichen Verfahren gefärbt oder bedruckt. Man erhält dann licht- und naßechte blaue bis violette Färbungen und Drucke.

Bei Temperaturangaben in den Beispielen handelt es sich um °C. Die Formeln der wasserlöslichen Farbstoffe in der Beschreibung und in den Beispielen sind die der freien Säuren. Handelt es sich um Reaktivfarbstoffe, dann werden diese in der Regel in Form ihrer Alkalisalze, insbesondere der Natrium-oder Kaliumsalze, isoliert und angewandt. Die in den Beispielen angegebenen Farbkennzahlen beziehen sich auf Color Index Hue Indication Chart (Indicator Numbers).

### Beispiel 1

Zu einer neutralisierten Lösung von 12,6 g 2-Aminobenzol-1,4-disulfonsäure in 50 ml Wasser tropft man bei 0-5 °C 4,4 ml Cyanurfluorid in 5 Minuten zu und hält den pH-Wert mittels 1 n Sodalösung auf 4,5-5,0 (Reaktiv komponente). 24 g Farbstoffkomponente der Formel 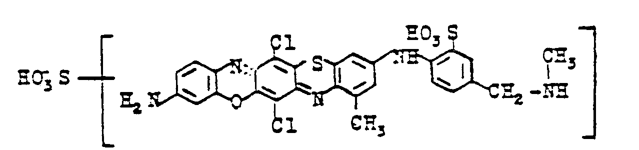 werden in 900 ml Wasser bei pH 11-12 gelöst.

Man läßt die Lösungen der Farbstoffkomponente und der Reaktivkomponente in 100 ml vorgelegtes Wasser bei 0-5 °C gleichmäßig in etwa 30 Minuten so eintropfen, daß gleiche Bruchteile beider Komponenten pro Zeiteinheit in das Reaktionsgemisch gelangen, und hält den pH-Wert durch Zutropfen von 1 n Natronlauge auf 7,5. Nach Abklingen der Reaktion läßt man die Temperatur auf 20° steigen, rührt noch 2 Stunden nach und sättigt die Lösung mit Kaliumchlorid. Der ausgefallene Farbstoff, der im wesentlichen der Formel 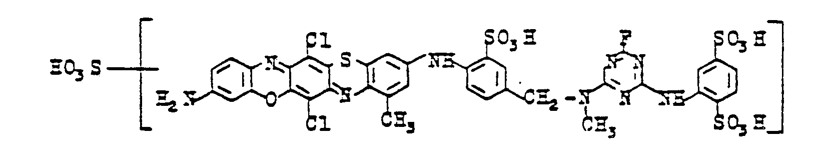 (λₘₐₓ = 596 nm in Wasser)
entspricht, wird abgesaugt, mit 25%iger Kaliumchloridlösung gewaschen und bei 40° im Vakuum getrocknet.

Er färbt Baumwolle aus langer Flotte nach den für Reaktivfarbstoffe bekannten Färbetechniken in kräftigen Blautönen, die gute Licht- und Naßechtheiten aufweisen. (C. I. Indicator Number 14)

Die oben eingesetzte Farbstoffkomponente läßt sich beispielsweise folgendermaßen herstellen.

28 g 6-Nitro-1,2,4-trichlor-3H-phenoxazin-3-on (A) und

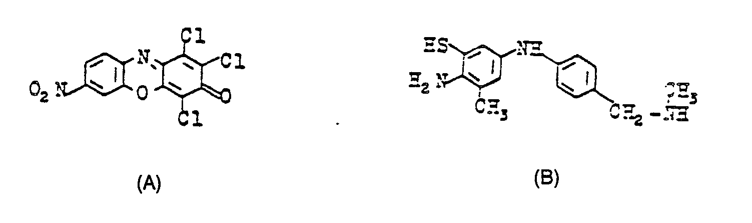

25 g 2-Amino-3-methyl-5-(4'-N-methylaminomethyl-phenylamino)-thiophenol (B), in Form des Zinksalzes werden homogen vermischt und unter Stickstoffatmosphäre in 150 ml Pyridin eingetragen. Man läßt dabei die Temperatur auf 30-35° ansteigen und rührt noch 1 Stunde nach. Das ausgefallene Produkt wird abgesaugt und mit Pyridin bis zum klar blauen Ablauf, danach mit Wasser gewaschen und getrocknet. Es wird eine grünstichig blaue Nitroverbindung erhalten (Aₘₐₓ = 664 nm in Dimethylformamid). 25 g der erhaltenen Nitroverbindung werden in 150 ml Ethanol oder Glykolmonoethylether auf 70° erwärmt. Zu der Suspension läßt man 6,2 g Natriumhydrogensulfid als 25 %ige wässrige Lösung in 30 Min. zutropfen. Nach 2-stündigem Nachrühren ist die Reaktion beendet. Man kühlt das Reaktionsgemisch auf Raumtemperatur ab und leitet nun mehrere Stunden Luft ein, bis die anfangs grüne Farbe nach rein blau umgeschlagen ist. Nach Zutropfen von 240 ml Wasser wird die ausgefallene Aminofarbbase abgesaugt, mit Wasser gewaschen und getrocknet. Das erhaltene Reduktionsprodukt der Formel 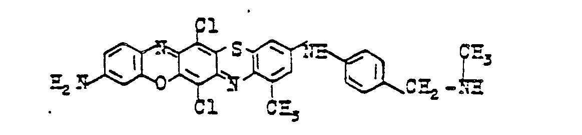 (Aₘₐₓ = 639 nm in Dimethylformamid)
ist in Lösung deutlich rotstichiger blau als die Nitroverbindung.

Die für die Kondensation mit der Reaktivkomponente eingesetzte Farbstoffsulfonsäure wird erhalten, indem man 21 g der Aminofarbbase in 84 ml 13 %iges Oleum bei 20° einträgt, 1 Stunde nachrührt, die Lösung auf Eis gießt, absaugt und mit 10 %iger Natriumchloridlösung sulfatfrei wäscht.

Weitere Reaktivfarbstoffe, die für das Färben und Bedrucken von Cellulosefasern in blauen Tönen geeignen sind (C. I. Indicator Number 14), werden erhalten, wenn man die Reaktivkomponenten der Tabelle mit der Farbstoffkomponente des Beispiels 1 im Molverhältnis 1 : 1 kondensiert:

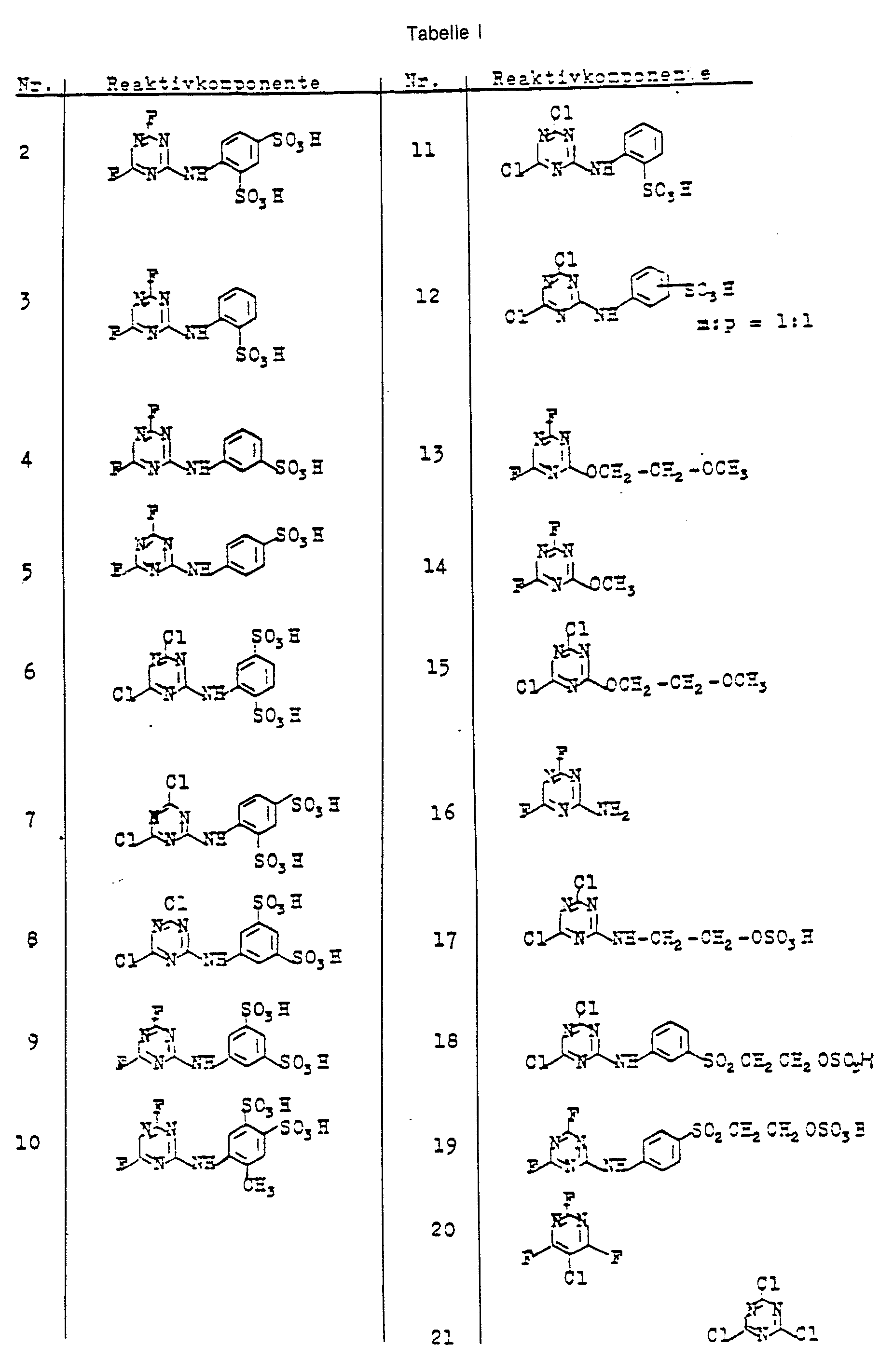

### Beispiel 22

21,6 g Benzothiazinophenoxazin-Komponente der Formel 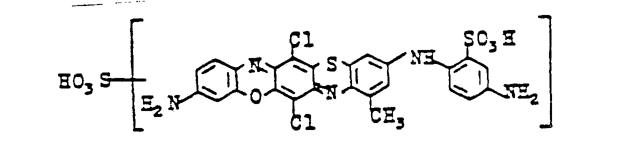 werden in 500 ml Wasser durch Einstellen eines pH-Wertes von 9 in das Dinatriumsalz überführt. Man gibt 100 ml Aceton zu, kühlt auf 0-5° ab und läßt zu der Lösung in 30 Minuten die Lösung der Reaktivkomponente zutropfen, die nach den Angaben des Beispiels 1 aus 12,6 g 2-Aminobenzol-1,4- disulfonsäure und 4,5 ml Cyanurfluorid bereitet wird. Im Reaktionsgemisch hält man den pH-Wert mit 2 n Sodalösung auf 6,0-6,5. Ist die Kondensation nach mehrstündigem Rühren beendet, steigert man die Temperatur auf 20°, rührt 2 Stdn. bei pH 6,5-7 nach und trägt Kaliumchlorid bis zur Sättigung ein. Man saugt den ausgefallenen Farbstoff ab, wäscht ihn mit 25 %iger und dann mit 20 %iger Kaliumchloridlösung und trocknet ihn bei 40° im Vakuum. Er entspricht im wesentlichen der Formel 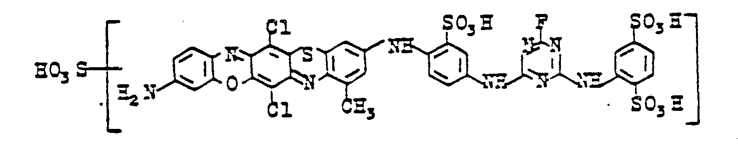 (λₘₐₓ = 599 nm in Wasser)
und färbt Cellulosefasern aus langer Flotte in kräftigen Blautönen mit gutem Echtheitsniveau (C. I. Indicator Number 14).

Die oben eingesetzte Farbstoffkomponente kann analog den Angaben des Beispiels 1 durch Kondensation von 6-Nitro-1,2,4-trichlor-3H-phenoxazin-3-on mit 2-Amino-3-methyl-5-(4'-nitro-phenylam!- no)-thiophenol, Reduktion der erhaltenen Dinitroverbindung zur Diaminoverbindung (λₘₐₓ = 646 nm in Dimethylformamid, Massenspektrum : Molmassen 505 und 507 mit der für 2 CI-Atome typischen Intensitätsverteilung) und Sulfonierung in 16 %igem Oleum erhalten werden. Das erhaltene Produkt weist nach Ausweis der Elementaranalyse zwei Sulfonsäuregruppen auf. Die grünstichig blaue Lösung des Dinatriumsalzes in Wasser-Dimethylformamid 1 : 1 zeigt hₘₐₓ = 650 nm.

Setzt man die in Spalte 2 der Tabelle II aufgezeigten Benzothiazinophenoxazin-Komponenten mit den Reaktivkomponenten der Spalte 3 im Molverhältnis 1 : 1 um, so erhält man analog zu den Beispielen 1 und 2 weitere für das Färben und Bedrucken von Cellulosefasern geeignete blaue Reaktivfarbstoffe, (C. I. Indicator Number 14) in denen die Reaktivgruppe mit der Aminogruppe des Brückengliedes verknüpft ist.

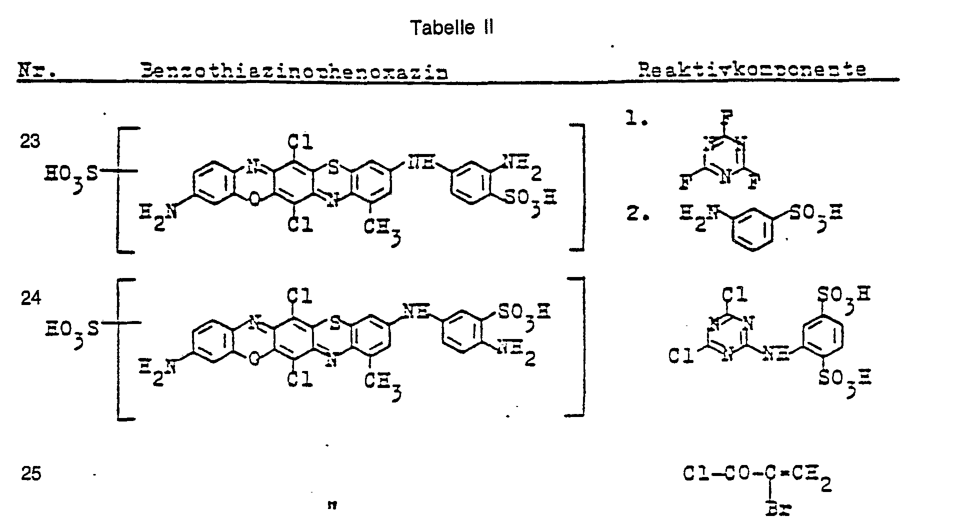

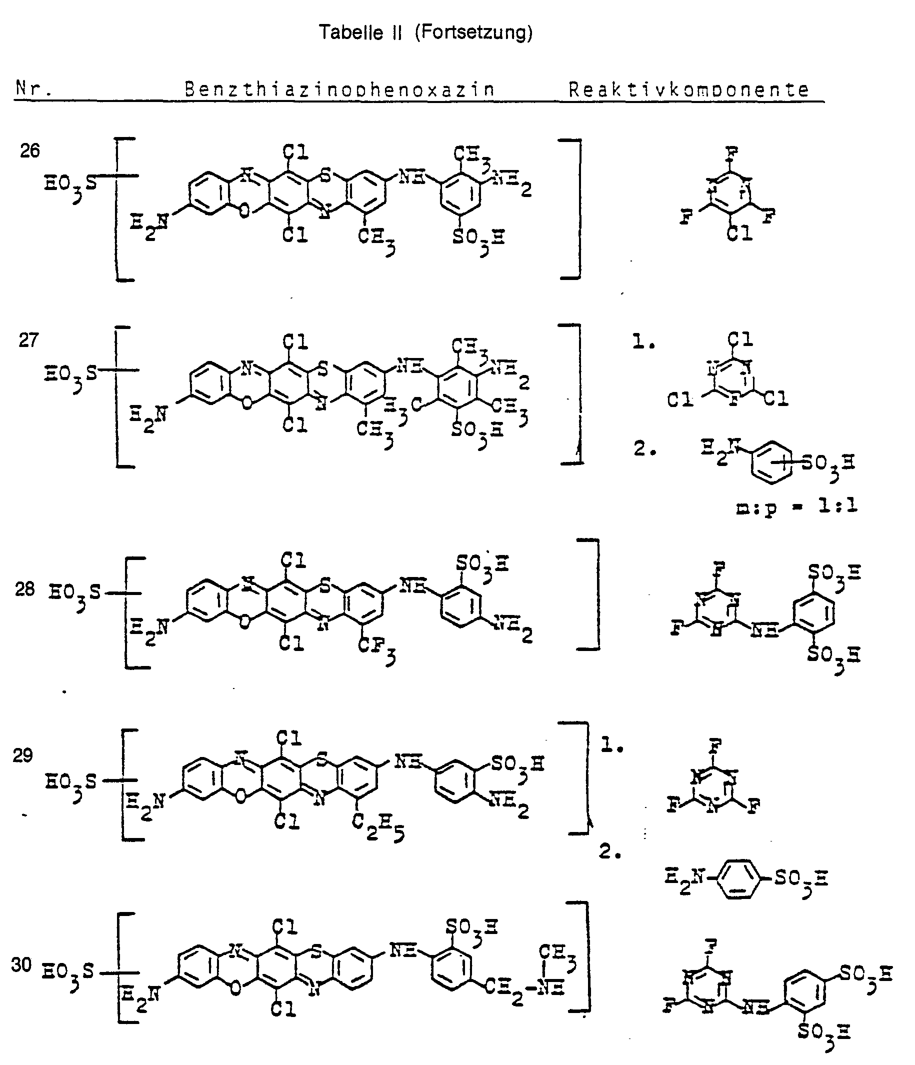

### Beispiel 31

15,5 g der Benzothiazinophenoxazin-Verbindung der Formel 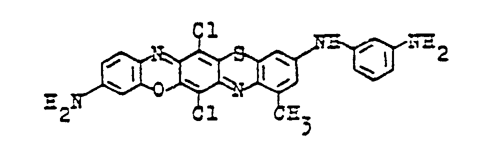 (λₘₐₓ = 644 nm in Dimethylformamid)
werden in 75 ml Dimethylformamid gelöst bzw. suspendiert. Man läßt bei 20-25° innerhalb 5 Minuten 3,5 ml 2,4,6-Trifluor-5-chlorpyrimidin = 5,7 g zutropfen und hält dabei obige Temperatur ein. Nach 1-2 Stunden ist die Umsetzung beendet, das entstandene Kondensationsprodukt ausgefallen. Es liegt fast ausschließlich die Verbindung 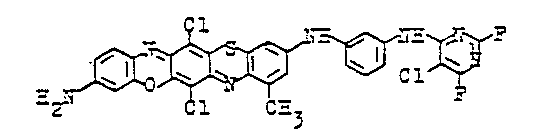 (λₘₐₓ = 637 nm in Dimethylformamid)
vor, daneben nur Spuren des Bis-Kondensationproduktes. Man rührt das Reaktionsgemisch langsam in 1 I 10 %ige Natriumchloridlösung ein, rührt 15 Min. nach, saugt ab und wäscht den Filterkuchen mit Wasser chloridfrei und trocknet bei 50° im Umluftschrank.

19 g des auf diese Weise erhaltenen Zwischenproduktes werden in 90 ml 20 %iges Oleum bei 15-20° eingetragen und gelöst. Man rührt einige Stunden bei 20° nach, bis eine Probe keine Änderung im chromatographischen Verhalten mehr zeigt. Der Farbstoff wird durch Eingießen des Reaktionsgemisches in 700 g Eis, Zusatz von 120 g Natriumchlorid, Steigerung der Temperatur auf 20°, Absaugen und zweimaliges Abdecken des Nutschkuchens mit 15 %iger Natriumchloridlösung isoliert. Der saure Filterkuchen wird in 300 ml Wasser suspendiert, die Lösung mit 2 n Natronlauge vorsichtig auf pH 6,5 gestellt. Aus der neutralisierten Lösung wird der Farbstoff ausgesalzen, abgesaugt und mit 25 %iger Natriumchloridlösung sulfatfrei gewaschen. Er enthält nach Ausweis der Elementaranalyse 3 Sulfonsäuregruppen und entspricht der Formel 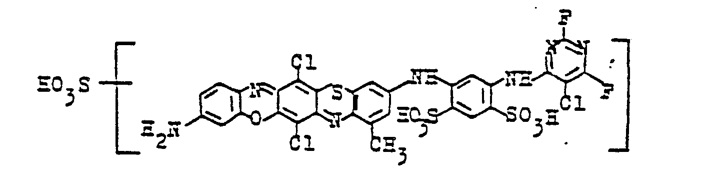 (Amax ₌ 577 nm in Wasser)

Der Farbstoff färbt Baumwolle in kräftigen rotstichigen Blautönen mit guten Echtheiten (C. 1. Indicator Number 14).

Zur Herstellung der am Beginn dieses Beispiels eingesetzten Benzothiazinophenoxazin-Farbbase kann man beispielsweise 45 g 6-Nitro-1,2,4-trichlor-3H-phenoxazin-3-on und 41 g 2 Amino-3-methyl-4-(3'-nitrophenylamino)-thiophenol analog Beispiel 1 in Pyridin oder bei 80-110° in Eisessig kondensieren und die erhaltene Dinitroverbindung mit Natriumhydrogensulfid oder Natriumsulfid in einem Lösungsmittel-Wasser-Gemisch oder in Wasser zur Diamino- verbindung reduzieren. Das Produkt zeigt im Massenspektrum die Molmassen 505 und 507 mit der für 2 CI-Atome charakteristischen Intensitätsverteilung.

### Beispiel 32

13,2 g Benzothiazinophenoxazin-Komponente der Formel 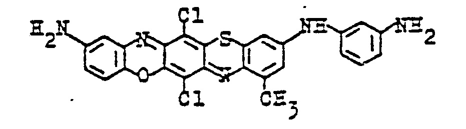 (Aₘₐₓ = 642 nm in Dimethylformamid)
werden in 100 ml Dimethylformamid gelöst. Man läßt innerhalb von 10 Minuten bei 20-25° 3,4 ml 2,4,6-Trifluor-5-chlorpyrimidin zutropfen und rührt die allmählich dicker werdende Mischung 5 Stunden weiter, bis eine Probe im Chromatogramm kein Ausgangsprodukt mehr zeigt. Die Fällung wird abgesaugt, der Filterkuchen mit Isopropanol gewaschen und das Produkt im Umluftschrank getrocknet. Es entspricht der Formel 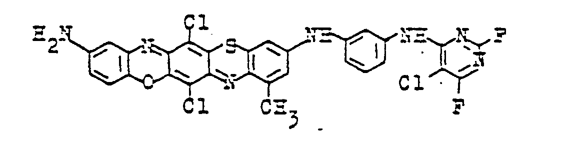 und weist in Dimethylformamid den Wert λₘₐₓ = 622 nm auf.

13,0 g des erhaltenen Zwischenprodukts werden in 65 ml 20 %iges Oleum eingetragen. Man läßt das Oleum mehrere Stunden einwirken, bis eine Probe im Chromatogramm keine Veränderung mehr erkennen läßt. Der Ansatz wird auf 500 g Eis gegeben, die Suspension mit 60 g Natriumchlorid versetzt, die Fällung abgesaugt und der Filterkuchen mit 25 %iger Natriumchloridlösung sulfatfrei gewaschen.

Der saure Filterkuchen wird in 200 ml Wasser gelöst, die Lösung vorsichtig mit verdünnter Natronlauge auf pH 6,5 gestellt, der Farbstoff durch Natriumchlorid abgeschieden, abgesaugt und der Filterkuchen mit 20 %iger Natriumchloridlösung gewaschen. Er entspricht der Formel 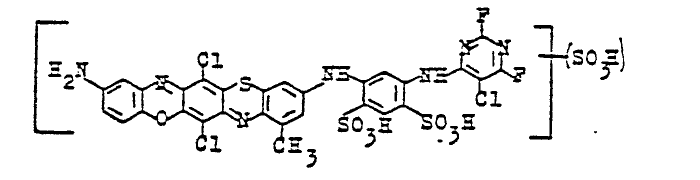 (Amax ₌ 598 nm in Wasser)
und färbt Cellulosefasern in licht- und naßechten Blautönen (C. 1. Indicator Number 14).

Weitere blaue Farbstoffe dieses Typs der C. I. Indicator Number 14 sind erhältlich, wenn man die in der Spalte 2 der Tabelle III aufgeführten Benzothiazinophenoxazin-Komponenten mit den Reaktivkomponenten der Spalte 3 im Molverhältnis 1 : 1 kondensiert und durch anschließende Sulfonierung Sulfonsäuregruppen einführt. In der folgenden Tabelle 111 bedeutet n die Zahl der eingeführten Sulfonsäuregruppen.

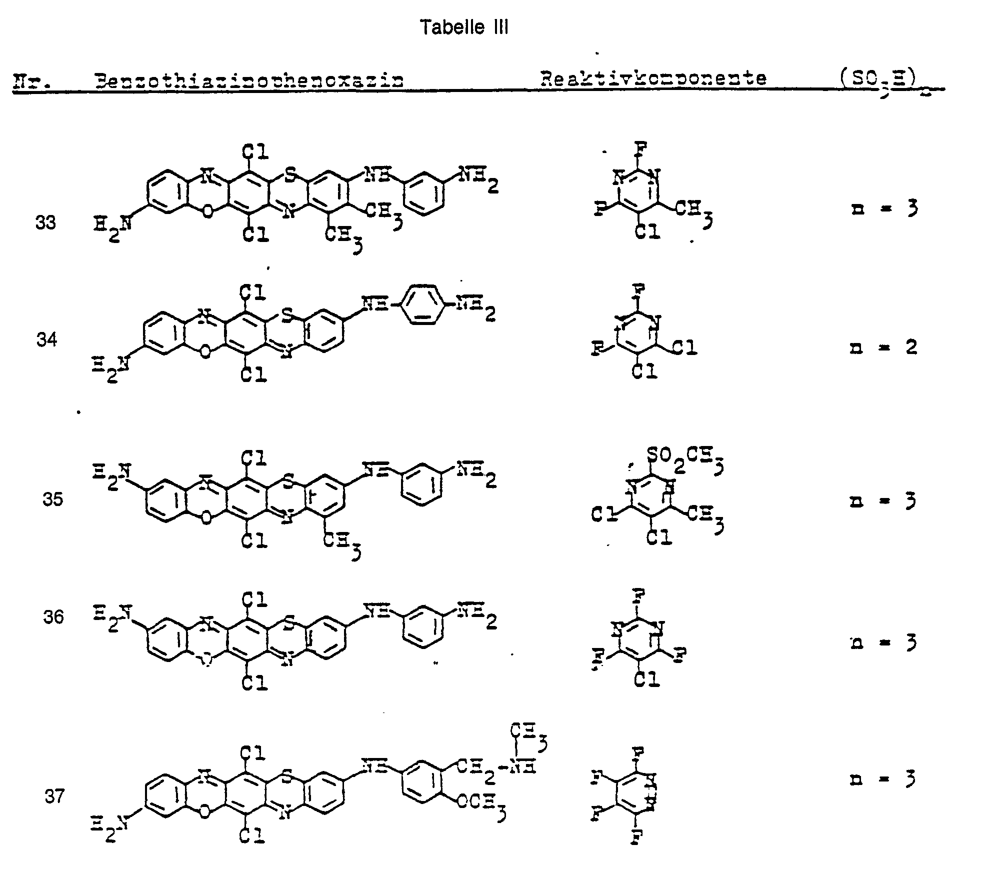

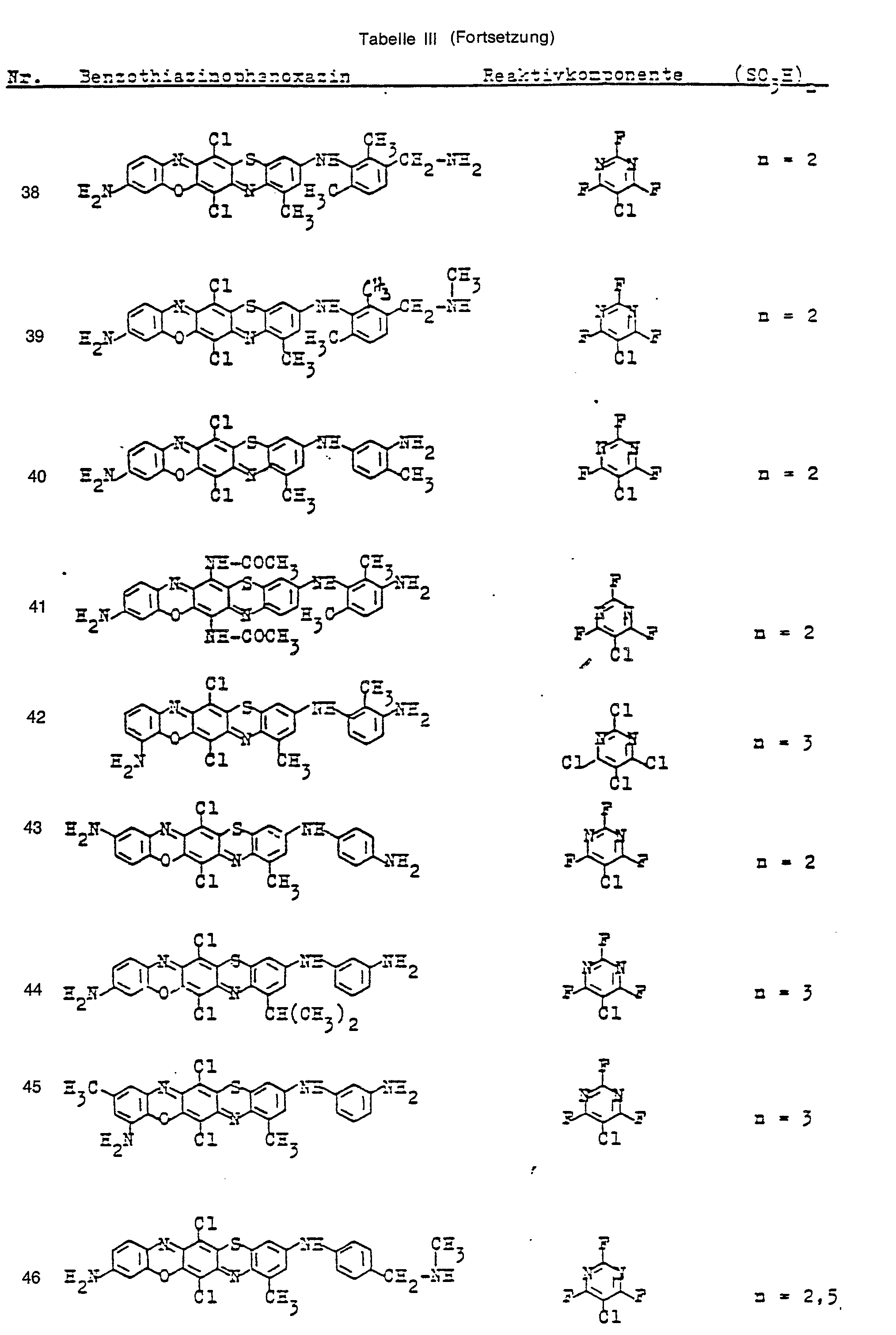

### Beispiel 47

13,5 g Benzothiazinophenoxazin-Verbindung der Formel 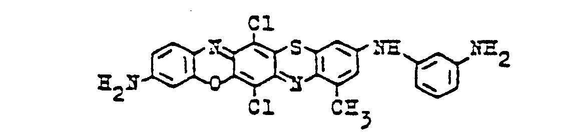 werden in 100 ml Dimethylformamid bei 35-40° gelöst. Man läßt 9,9 ml 2,4,6-Trifluor-5-chloryrimidin in 10 Min. zutropfen und rührt einige Stunden bei 35-40° nach, bis das aus Beispiel 35 bekannte Monokondensationsprodukt praktisch verschwunden ist, was mit zunehmender Ausfällung und der Verdickung des Reaktionsgemisches verbunden ist. Das ausgefallene Biskondensationsprodukt der Formel 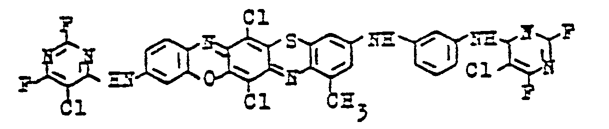 (λₘₐₓ = 630 nm in Dimethylformamid)
wird abgesaugt, mit Methanol gewaschen und getrocknet.

15,0 g des erhaltenen Kondensationsproduktes werden in 60 ml Oleum 20 %ig bei 18-20° in 3 Stunden gleichmäßig eingetragen. Man läßt 2 Stunden bei 20° reagieren, gibt das Reaktionsgemisch auf 500 g Eis, setzt 125 g Kaliumchlorid zu der Suspension, erwärmt auf 15°, saugt den Niederschlag ab und wäscht ihn mit 25 %iger Kaliumchloridlösung sulfatfrei. Der Filterkuchen wird in 100 ml Wasser gelöst, die Lösung mit 1 n Natronlauge auf pH 6,5 gestellt und im Rotationsverdampfer im Vakuum eingedampft. Man erhält den Farbstoff in Form eines blauen Pulvers. Er enthält laut Analyse 3,7 Sulfonsäuregruppen und läßt sich durch die folgende Formel 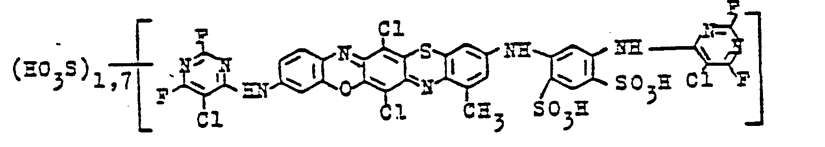 (A_{max =} 580 nm in Wasser)
beschreiben.

Der Farbstoff gibt auf Baumwolle aus langer Flotte bei 40° kräftige blaue Färbungen mit guten Echtheitseigenschaften (C. I. Indicator Number 14).

Weitere ähnliche blaue Reaktivfarbstoffe werden erhalten, wenn man die in Spalte 2 der Tabelle IV aufgeführten Benzothiazino-phenoxazin-Komponenten mit den Reaktivkomponenten der Spalte 3 im Molverhältnis 1 : 2 kondensiert und anschließend durch Sulfonierung mit mindestens 20 %igem Oleum n Sulfonsäuregruppen einführt.

In Tabelle IV bedeutet n die Zahl der eingeführten Sulfonsäuregruppen.

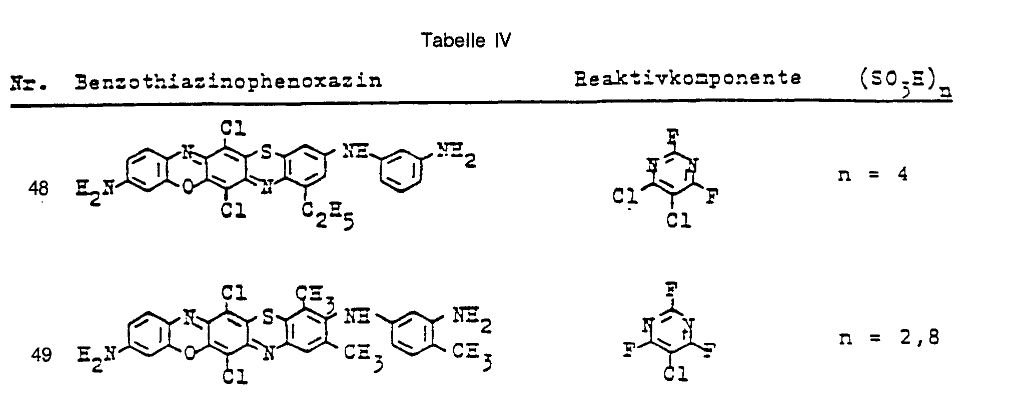

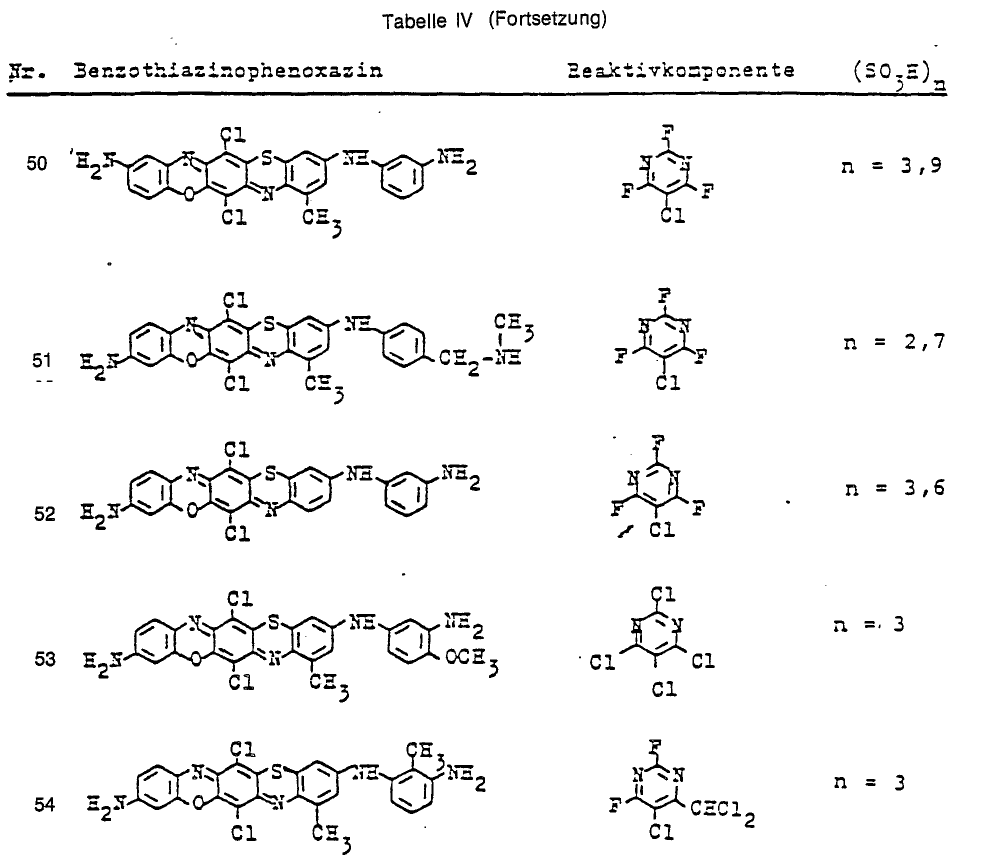

### Beispiel 55

11 g Benzothiazinophenoxazin-Verbindung der Formel, 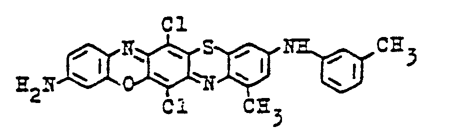 (λₘₐₓ = 638 nm in DMF)
hergestellt durch Kondensation von 6-Nitro-1,2,4-trichlor-3H-phenoxazin-3-on mit 2-Amino-3-methyl-4-(3'-methylphenylamino)-thiophenol und anschließende Reduktion der Nitrogruppe, werden bei 18-20° in eine Mischung aus 24 ml 20 %igem Oleum und 24 ml konzentrierte Schwefelsäure eingetragen. 30 Minuten nach dem Eintragen ist das Produkt gelöst. Man setzt noch 12 ml 20 %iges Oleum nach und läßt etwa eine Stunde weiter reagieren, bis intermediär aufgetretene Monosulfonsäure chromatographisch, nicht mehr nachweisbar ist. Das Reaktionsgemisch wird nun auf 400 g Eis und 40 g Natriumchlorid gegeben. Man wärmt die Suspension auf 20°. Die Fällung wird abgesaugt und mit 10 %iger Natriumchloridlösung sulfatfrei gewaschen und getrocknet. Das Produkt entspricht der Formel 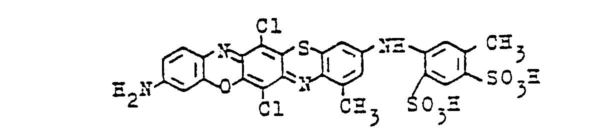 (λₘₐₓ = 574 nm in Wasser)
und kann zum Färben von synthetischen Polyamidfasern wie Perlon und Nylon 66 eingesetzt werden. Man erhält dann licht- und sehr naßechte klare Blautöne (C. I. Indicator Number 14).

15,2 g der erhaltenen Disulfonsäure (berechnet auf salzfreie Substanz) werden in 300 ml Wasser bei 50° auf pH 8 gestellt. Man setzt 60 ml Dimethylformamid zu und kühlt auf 0-5° ab.

Darauf läßt man die Lösung einer Reaktivkomponente, die nach Angaben des Beispiels 1 aus 11,3 g 2-Aminobenzol-1,4-disulfonsäure und 4,0 ml Cyanurfluorid hergestellt war, in 30 Minuten bei 0-5° zutropfen und hält den pH-Wert auf 5,8-6,3. Man steigert anschließend die Temperatur auf 20° und hält noch einige Stunden den pH-Wert, bis der Verbrauch an Sodalösung völlig zum Stillstand kommt. Der erhaltene Farbstoff wird mit Natriumchlorid ausgesalzen, abgesaugt und mit 10 %iger Natriumchloridlösung gewaschen. Er entspricht der Formel 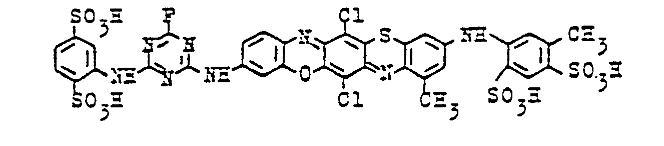 (^{A}ₘₐₓ = 589 nm in Wasser)
und färbt Baumwolle aus langer Flotte in kräftigen, naßechten, rotstichigen Blautönen (C. I. Indicator Number 13).

### Beispiel 56

8,0 g Benzothiazinophenoxazin-Verbindung der Formel, 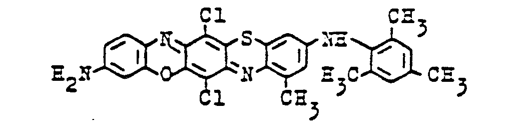 (Aₘₐₓ = 634 nm in Dimethylformamid, Massenspektrum Molmassen 532 und 534 mit der für 2 CI-Atome charakteristischen Intensitätsverteilung)
hergestellt durch Kondensation von 6-Nitro-1,2,4-trichlor-3H-phenoxazin-3-on mit 2-Amino-3-methyl-4-(2', 4', 6'-trimethyl-phenylamino)-thiophenol und nachfolgende Reduktion der Nitrogruppe des Kondensationsproduktes, werden in 40 ml 20 %iges Oleum bei 15-20° eingetragen. Man rührt etwa 4 Stunden bei dieser Temperatur weiter, gibt das Gemisch auf 400 g Eis, saugt die Fällung ab und wäscht den Filterkuchen mit 10 %iger Natriumchloridlösung sulfatfrei. Das Produkt wird bei 50° im Umluftschrank getrocknet. Es enthält gemäß Analyse zwei Sulfonsäuregruppen und entspricht damit der Formel 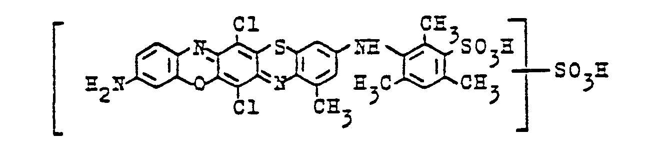 (λₘₐₓ = 578 nm in Wasser)

Der Farbstoff ist geeignet zum Färben von synthetischen und natürlichen Polyamidfasern, wie Perlon, Nylon 66, Wolle und Seide, und gibt auf diesen Materialien klare, rotstichig blaue Färbungen.

9,2 g der erhaltenen Disulfonsäure (berechnet auf salzfreie Substanz) werden in 150 ml Wasser bei 50° bei pH 7-8 gelöst. Man kühlt auf 0-5° ab, läßt dann die Lösung einer Reaktivkomponente, die nach den Angaben des Beispiels 1 aus 5,8 g 2-Aminobenzol-1,4-disulfonsäure und 2,1 ml Cyanurfluorid hergestellt war, in 30 Minuten bei 0-5° zutropfen und hält den pH-Wert im Reaktionsgemisch mit 1 n Sodalösung auf 6,0-6,3. Nach 24 Stunden läßt man die Temperatur aud 20° ansteigen und hält weiterhin den pH-Wert bis kein weiterer Verbrauch an Sodalösung erfolgt. Die erhaltene Farbstofflösung wird dann mit 22% Kaliumchlorid allmählich versetzt, der ausgefällte Farbstoff abgesaugt, mit 25 %iger Kaliumchloridlösung gewaschen und im Vakuum bei 40° getrocknet. Er entspricht der Formel 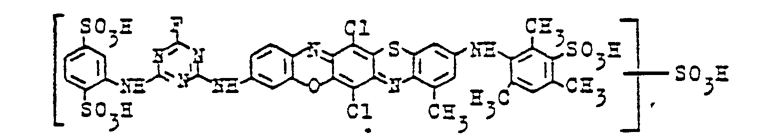 (λₘₐₓ = 610 nm in Wasser)
und färbt Cellulosefasern in naßechten Blautönen (C. I. Indicator Number 14).

### Beispiel 57

Setzt man im Beispiel 64 an Stelle der dort genannten Benzothiazinophenoxazin-Verbindung die äquivalente Menge eines Produktes der Formel 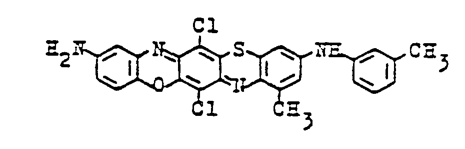 (λₘₐₓ = 637 nm in Dimethylformamid, Massenspektrum Molmassen 504 und 506 mit der für 2 Cl-Atome charakteristischen Intensitätsverteilung)
ein (hergestellt durch Kondensation von 7-Nitro-1,2,4-trichlor-3H-phenoxazin-3-on mit 2-Amino-3-methyl-4-(3'-methylphenylamino)-thiophenol und anschließende Reduktion der Nitrogruppe des Kondensationsproduktes) und führt die Sulfonierung nach den dortigen Angaben durch, so erhält man ein Produkt der Formel, 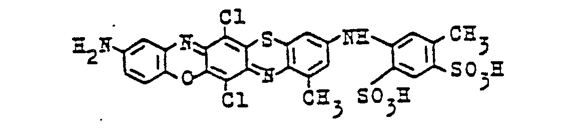 (λₘₐₓ = 575 nm in Wasser)
das synthetische Polyamidfasern wie Perlon und Nylon 66 in licht- und sehr naßechten Blautönen färbt.

Kondensiert man die erhaltene Disulfonsäure mit 2,4-Difluor-6-triazinyl-2-aminobenzol-1,4-disulfonsäure, wie im Beispiel 64 beschrieben, so erhält man einen Reaktivfarbstoff der Formel, 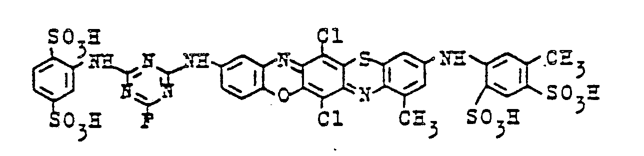 (Amax = 583 nm in Wasser)
der Baumwolle ebenfalls in naßechten, rotstichigen Blautönen färbt (C. I. lndicator Number 13).

Weitere ähnliche Farbstoffe, die zum Färben von Cellulosefasern in rotstichig blauen Tönen angewandt werden können, lassen sich durch Kondensation der in Tabelle V, Spalte 2, angegebenen Benzothiazinophenoxazin-Komponenten mit den Reaktivkomponenten der Spalte 3 erhalten.

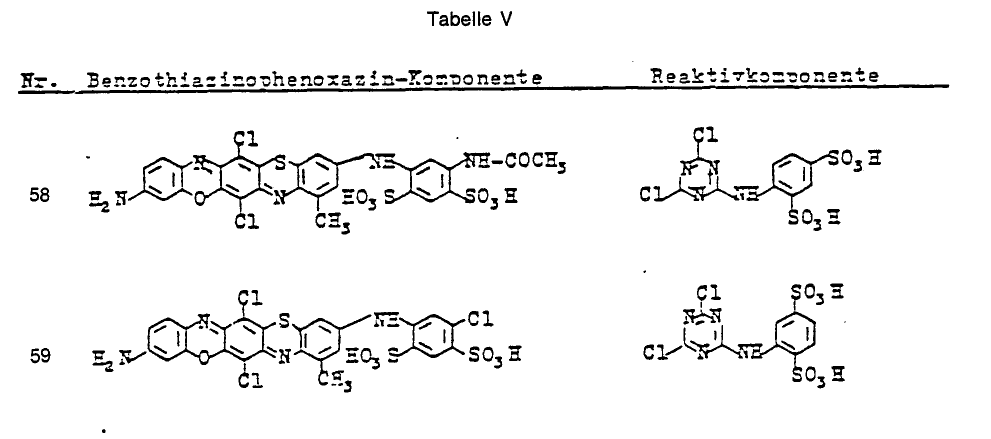

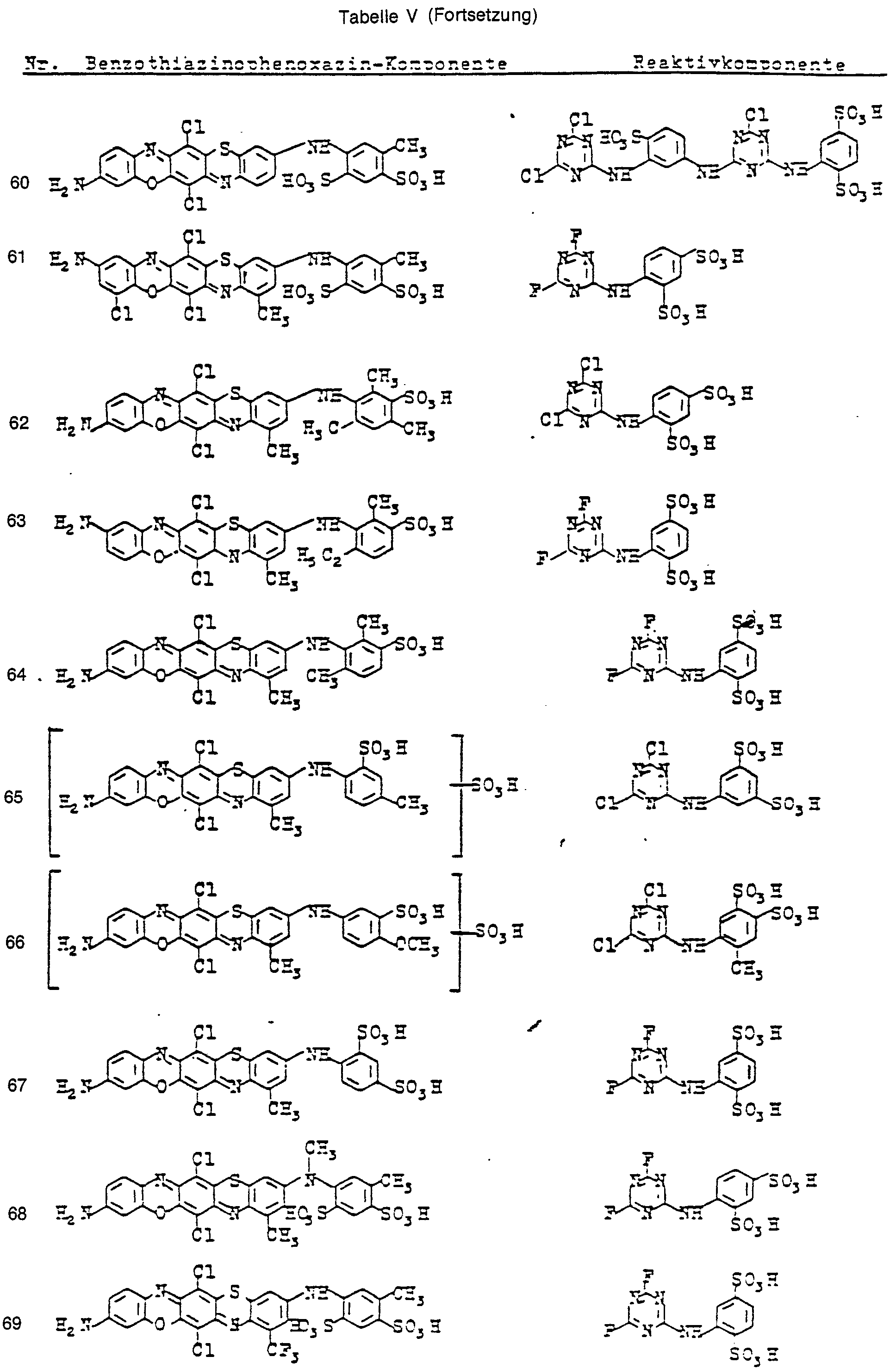

### Beispiel 70

12,0 g Benzothiazinophenoxazin-Verbindung der Formel 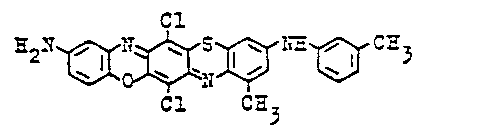 (Aₘₐₓ = 637 nm in Dimethylformamid)
werden in 60 ml Dimethylformamid gelöst und die Mischung bei 20° in 5 Minuten tropfenweise mit 3,0 ml 2,4,6-Trifluor-5-chlorpyrimidin versetzt. Man rührt den Ansatz 2 Stunden weiter, gibt ihn dann auf 500 ml Eis-Wasser, saugt das ausgefallene Kondensationsprodukt ab, wäscht es mit Wasser frei von Dimethylformamid und trocknet es im Umluftschrank bei 50°. Man erhält ein mit blauer Farbe in Dimethylformamid lösliches Zwischenprodukt (λₘₐₓ = 624 nm).

13,5 g dieses Zwischenproduktes werden bei Raumtemperatur in 60 ml 20 %iges Oleum eingetragen. Man läßt das Oleum, nachdem die Substanz völlig gelöst ist, noch 2 Stunden einwirken und gibt dann das Reaktionsgemisch auf 500 g Eis. Nach Zusatz von 50 g Natriumchlorid wird der Niederschlag abgesaugt und mit 25 %iger Natriumchloridlösung gewaschen. Man löst den Filterkuchen bei pH 6,5-7 in 400 ml Wasser und salzt den Farbstoff mit 120 g Natriumchlorid aus, saugt ihn ab und wäscht ihn mit 25 %iger Natriumchloridlösung. Der Farbstoff läßt sich durch die Formel 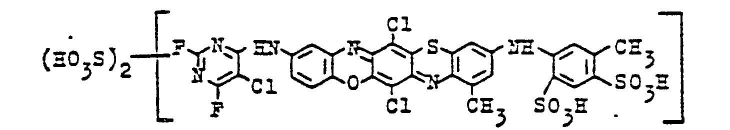 (λₘₐₓ = 607 nm in Wasser)
beschreiben und gibt blaue Färbungen mit guten Echtheitseigenschaften (C. I. lndicator Number 14).

### Beispiel 71

12,0 g Benzothiazinophenoxazin-Verbindung der Formel 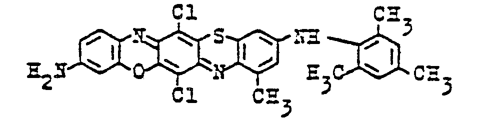 (hₘₐₓ = 634 nm in Dimethylformamid)
werden in 80 ml Dimethylformamid gelöst. Zur Lösung werden bei 25° 3,0 ml 2,4,6-Trifluor-5-chlorpyrimi- din zugetropft. Man rührt den Ansatz 24 Stunden weiter, saugt das ausgefallene Kondensationsprodukt ab und wäscht es mit Methanol. Das erhaltene Produkt (λₘₐₓ = 623 nm in DMF) wird bei 50-60° im Umluftschrank getrocknet und anschließend in 50 ml 20 %iges Oleum bei 15-20° eintragen. Ist die Sulfonierung nach einigen Stunden beendet, gibt man den Ansatz auf 400 g Eis, fügt 60 g Natriumchlorid hinzu, erwärmt unter Rühren auf 20° und saugt den ausgefällten Farbstoff scharf ab.

Der Filterkuchen wird in 100 ml Wasser suspendiert. Man bringt den Farbstoff durch Einstellen des pH-Wertes der Mischung auf 6,5 mittels verdünnter Natronlauge in Lösung und dampft die Lösung im Vakuum ein. Der als blaues Pulver so erhaltene Farbstoff enthält auf Grund analytischer Untersuchungen zwei Sulfonsäuregruppen und entspricht der Formel 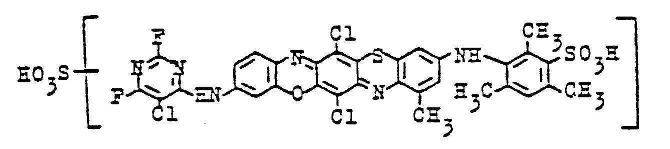
(λₘₐₓ = 610 nm in Wasser) Der Farbstoff färbt Cellulosefasern in neutralen naßechten Blautönen (C. I. Indicator Number 14).

### Beispiel 72

Setzt man im Beispiel 85 an Stelle der dort angegebenen Benzothiazinophenoxazin-Verbindung 12 g der Komponente der Formel 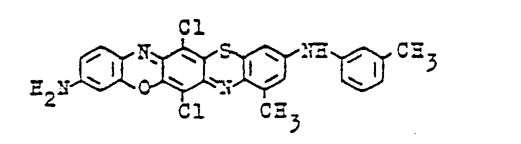 (λₘₐₓ = 638 nm in Dimethylformamid)
ein und verfährt im übrigen wie dort beschrieben, so erhält man ein Kondensationsprodukt, das in Dimethylformamid ebenfalls mit blauer Farbe löslich ist (λₘₑₓ = 631 nm in Dimethylformamid).

12,3 g dieses Kondensationsproduktes werden in 60 ml 14 %iges Oleum bei 20° eingetragen. Nach vierstündiger Oleumeinwirkung gibt man das Reaktionsgemisch auf 500 g Eis, saugt die Fällung ab und wäscht den Filterkuchen mit 25%iger Natriumchloridlösung sulfatfrei. Der Farbstoff wird in 300 ml Wasser gelöst, durch Einstellen auf pH = 6,5 neutralisiert und aus der Lösung mit Kaliumchlorid ausgesalzen. Man saugt ihn ab, wäscht ihn mit 20 %iger Kaliumchloridlösung und trocknet. Der Farbstoff weist statistisch einen etwas geringeren Sulfonierungsgrad als der des Beispiels 85 auf und kann durch die Formel 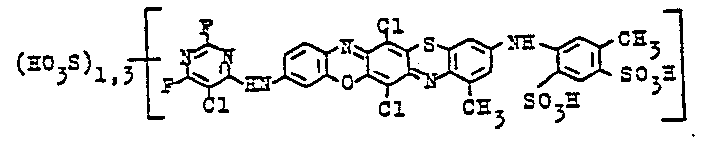 (Aₘₐₓ = 585 nm in Wasser)
wiedergegeben werden. Er färbt Baumwolle aus langer Flotte in naßechten Blautönen (C. I. Indicator Number 14).

Ähnliche Farbstoffe, die geeignet sind, auf Cellulosefasern licht- und naßechte blaue Färbungen (C. I. Indicator Number 14) zu erzielen, werden erhalten, wenn man folgende Benzothiazinophenoxazin-Komponenten und Reaktivkomponenten kondensiert und durch anschließende Sulfonierung n Sulfonsäuregruppen einführt. In der Tabelle VI bedeutet n die Zahl der eingeführten Sulfonsäuregruppen.

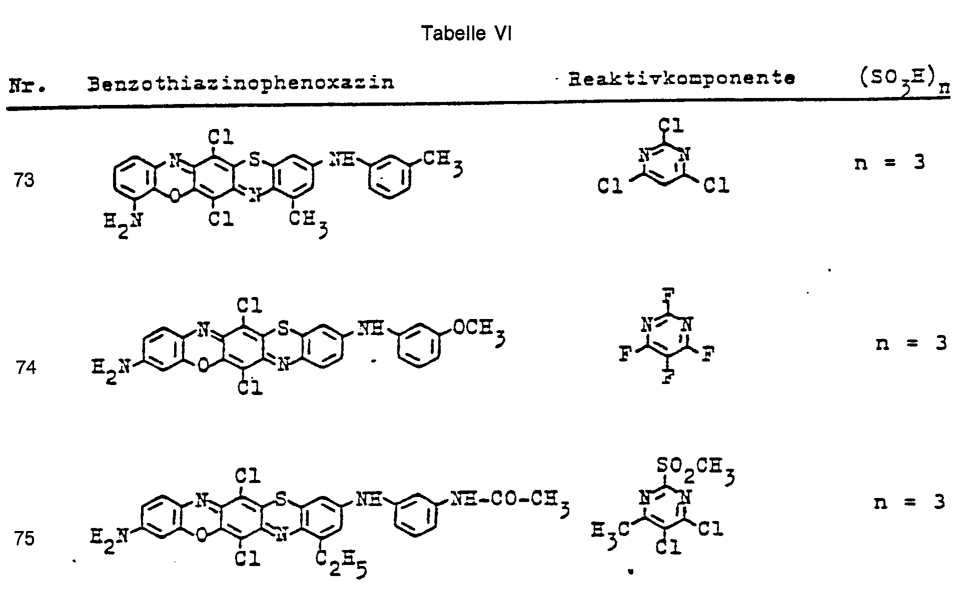

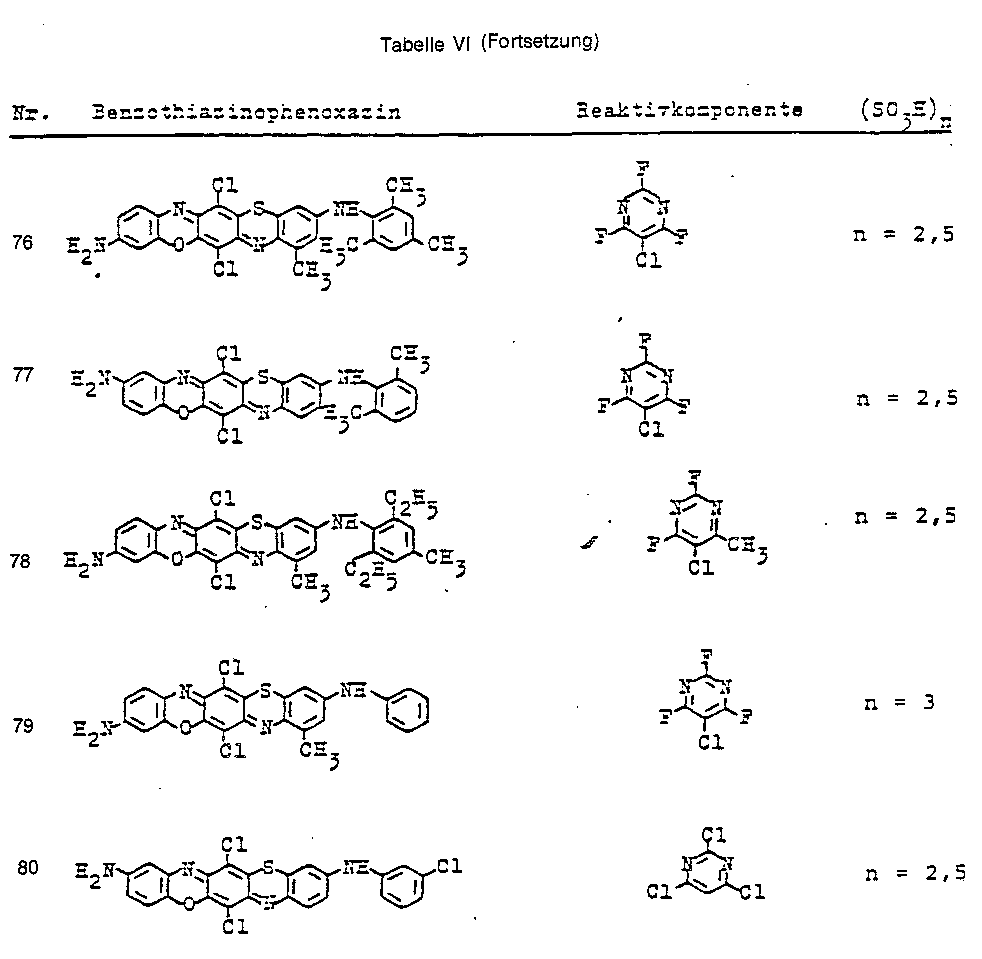

### Beispiel 81

15,0 g Benzothiazinophenoxazin-Base der Formel 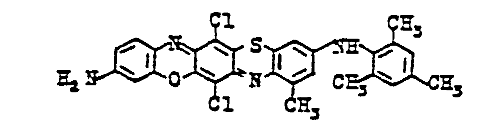 werden in 200 ml 87 %ige Schwefelsäure bei 10-15° innerhalb einer Stunde eingetragen. Man rührt zur vollständigen Lösung des Produktes noch 1 Stunde nach und setzt dann bei 5-10° in einer weiteren Stunde gleichmäßig 3,5 g N-Methylol-chloracetamid zu. Wenn die Kondensation bei 5-10° in 1 bis 2 Stunden beendet ist, gibt man das Produkt in 1 500 g Eis-Wasser, saugt es ab, wäscht den Kuchen mit Wasser sulfatfrei und trocknet ihn.

17 g des erhaltenen Kondensationsproduktes werden in 75 ml 20 %iges Oleum bei 15-20° eingetragen. Nach 8 Stunden gibt man die Lösung unter gleichmäßigem Rühren in 600 ml Wasser und erhitzt anschließend die entstandene Suspension am Rückflußkühler, bis eine chromatographische Probe vollständige Hydrolyse der Chloracetylaminogruppe anzeigt. Man kühlt die grünliche Suspension ab, saugt den Niederschlag ab, wäscht ihn mit verdünnter Salzsäure sulfatfrei und trocknet das Produkt, das der Formel 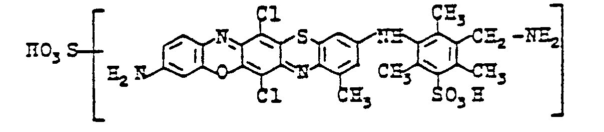
entspricht, bei 60° im Umluftschrank.

17,2 g des erhaltenen Produktes werden in 300 ml Wasser suspendiert. Man stellt den pH-Wert auf 10 und setzt 100 ml Aceton zu und reguliert erneut den pH-Wert. Die Lösung der Reaktivkomponente, die entsprechend den Angaben des Beispiels 1 aus 8,4 g 2-Aminobenzol-1,4-disulfonsäure und 3,0 ml Cyanurfluorid bereitet wurde, wird in 30 Minuten bei 0-5° zur Lösung der Farbstoffkomponente zugetropft und der pH-Wert im Reaktionsgemisch mit 1 n-Natronlauge auf 7,5-8,0 gehalten. Man beläßt 5 Stunden weiter unter diesen Bedingungen und läßt die Temperatur dann unter pH-Kontrolle über Nacht auf 20° ansteigen. Die Farbstofflösung wird im Vakuum auf ca. 60 % ihres Volumens eingeengt und der Farbstoff durch Sättigen der verbleibenden Lösung mit Kaliumchlorid ausgefällt. Man saugt die Fällung ab und wäscht das Produkt mit 25 %iger Kaliumchloridlösung. Der Farbstoff wird bei 40° im Vakuum getrocknet. Er entspricht der Formel, 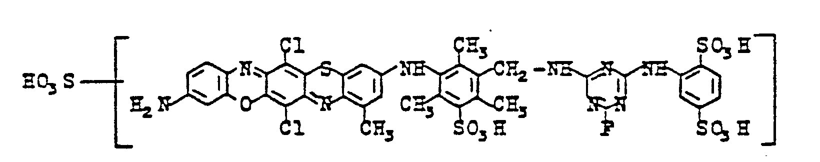 (Amax = 606 nm in Wasser)
und ergibt auf Cellulosefasern klare, blaue Färbungen und Drucke, die durch gute Licht- und Naßechtheiten gekennzeichnet sind (C. I. Indicator Number 14).

Weitere blaue Reaktivfarbstoffe lassen sich herstellen, wenn man analog entsprechend substituierte Benzothiazinophenoxazin-Farbbasen mit N-Methylolchloracetamid, N-Methylolacetamid oder N-Methylolformamid kondensiert, anschließend sulfoniert oder diese beiden Schritte in umgekehrter Reihenfolge durchführt, schließlich verseift und die so gewonnenen aminomethylierten Benzothiazinophenoxazinsulfonsäuren der Spalte 2 in Tabelle VII mit den Reaktivkomponenten der Spalte 3 umsetzt.

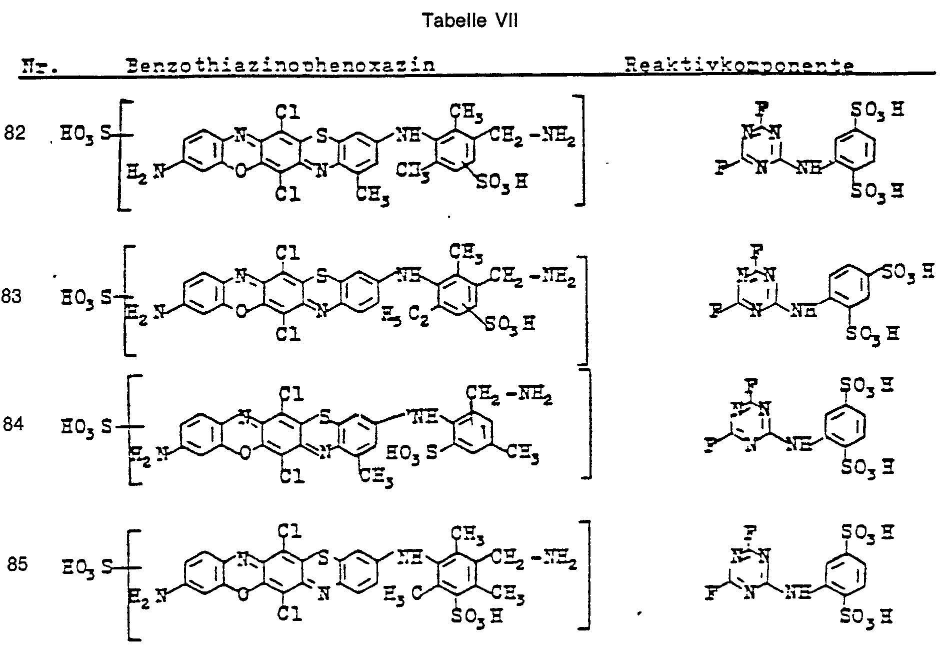

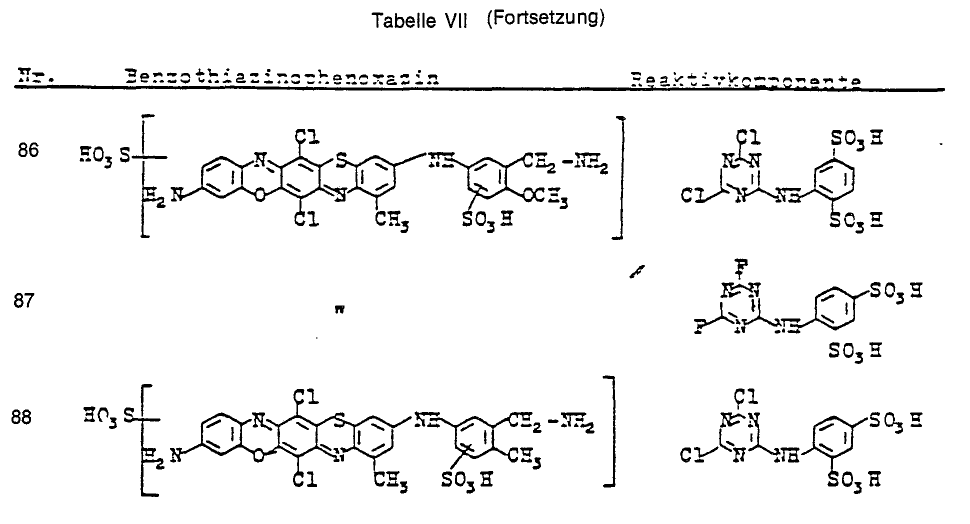

### Beispiel 89

11,7 g Disulfonsäure aus Beispiel 64 der Formel 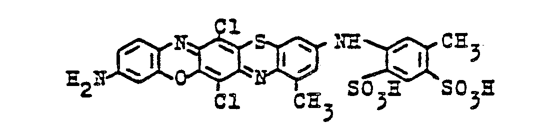 werden in 300 ml Wasser und 50 ml Aceton suspendiert. Durch Einstellen des pH-Wertes auf 7 wird die Substanz gelöst. Man kühlt die Lösung auf 0-5° ab und läßt in 5 Minuten 2,7 ml Cyanurfluorid zutropfen. Durch gleichzeitige Zugabe von 1 n Sodalösung wird der pH-Wert auf 5,5-5,0 gehalten. Nach beendeter Umsetzung ist das Kondensationsprodukt zum Teil ausgefallen. Man setzt nun eine neutralisierte Lösung von 6,3 g 3-Aminobenzolsulfonsäure in 60 ml Wasser zum Reaktionsgemisch und hält anschließend den pH-Wert auf 6,0-6,3. Die Temperatur wird zunächst 6 Stunden bei 0-5° gehalten, anschließend läßt man den Ansatz sich in 12-15 Stunden allmählich auf 20° erwärmen. Nach vollständiger Umsetzung ist totale Lösung eingetreten. Die Lösung wird nun mit 15 % Natriumchlorid versetzt, die entstandene Fällung abgesaugt, der Filterkuchen mit Natriumchloridlösung gewaschen und bei 40° im Vakuum getrocknet. Der erhaltene Farbstoff entspricht der Formel 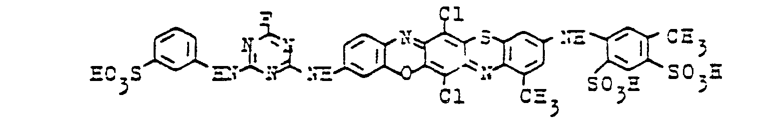 (Amax ₌ 585 nm in Wasser)
und färbt Baumwolle in licht- und naßechten Blautönen (C. I. Indicator Number 13).

Ein ähnlicher Farbstoff wird erhalten, wenn man anstelle der oben eingesetzten Amino-m-toluidinobenzothiazino-phenoxazindisulfonsäure die bezüglich der Aminogruppe isomere Disulfonsäure des Beispiels 66 in äquivalenter Menge einsetzt.

### Beispiel 90

Ein dem Farbstoff des Beispiels 1 ähnlicher Reaktivfarbstoff läßt sich erhalten, wenn man an Stelle der dort eingesetzten Amino-arylamino-benzothiazinophenoxazin-Verbindung die bezüglich der Aminogruppe isomere Verbindung 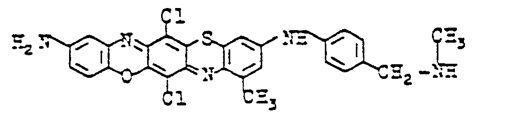 (λₘₐₓ = 634 nm in Dimethylformamid)
zur Sulfonierung einsetzt und die erhaltene sulfonierte Verbindung mit 2,4-Difluor-6-triazinyl-2-aminobenzol-1,4-disulfonsäure im Molverhältnis 1 : 1 kondensiert. Man erhält dann einen Farbstoff der ungefähren Zusammensetzung 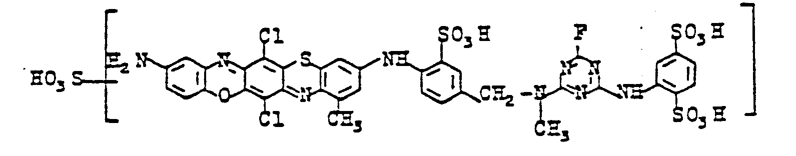 (λₘₐₓ = 604 nm in Wasser)
der Baumwolle in ähnlich blauen Tönen licht- und naßecht färbt wie der Farbstoff des Beispiels 1 (C. I. Indicator Number 14).

### Beispiel 91

12,0 g Farbstoffkomponente der Formel 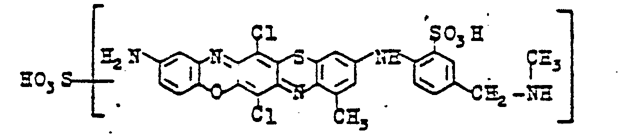 werden in 400 ml Wasser bei pH 11-12 gelöst. Außerdem stellt man aus 6,3 g 2-Aminobenzoldisulfonsäure in 50 ml Wasser und 2,2 ml Cyanurfluorid bei 0-5° und pH 4,5-5,0 eine Lösung von : Difluor-6-triazinyl-2-aminobenzol-1,4-disulfonsäure her. Man läßt nun die Lösungen der Farbstoff- und Reaktivkomponente in 50 ml vorgelegtes Wasser bei 0-5° in etwa 30 Minuten so eintropfen, daß glei Bruchteile beider Komponenten pro Zeiteinheit in das Reaktionsgemisch gelangen, und hält den pH-W durch Zutropfen von 1 n Natronlauge auf 7,5. Man rührt 1 Stunde nach. Eine chromatographische Prc zeigt im wesentlichen die Bildung des Reaktivfarbstoffes aus Beispiel 108 an. Nunmehr setzt man ern die gleiche Menge Reaktivkomponente wie oben nach und hält 24 Stunden den pH-Wert auf 6,5, Temperatur auf 0-5°. Danach läßt man die Temperatur auf 20° ansteigen und hält den pH-Wert, bis ke Natronlauge mehr aufgenommen wird. Die Lösung wird nun mit Kaliumchlorid gesättigt, die entstandi Suspension zur Vervollständigung der Fällung einige Stunden weiter gerührt und schließlich abgesat Der Filterkuchen wird mit 25 %iger Kaliumchloridlösung gewaschen und bei 40° im Vakuum getrocki Der erhaltene Farbstoff der Formel 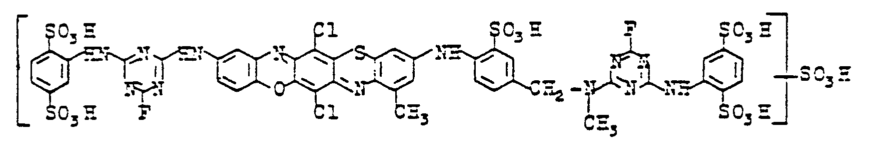 (λₘₐₓ = 606 nm in Wasser)
ergibt auf Cellulosefasern licht- und naßechte blaue Färbungen und Drucke (C. I. Indicator Number 14).

Analog erhält man weitere, für das Färben und Bedrucken von Cellulosefasern geeignete blaue Reaktivfarbstoffe, wenn man die Benzothiazinophenoxazin-Verbindungen in Spalte 2 der Tabelle VIII mit den Reaktivkomponenten der Spalte 3 im Molverhältnis 1 : 2 kondensiert.

### (Siehe Tabelle VIII Seite 26 f.)

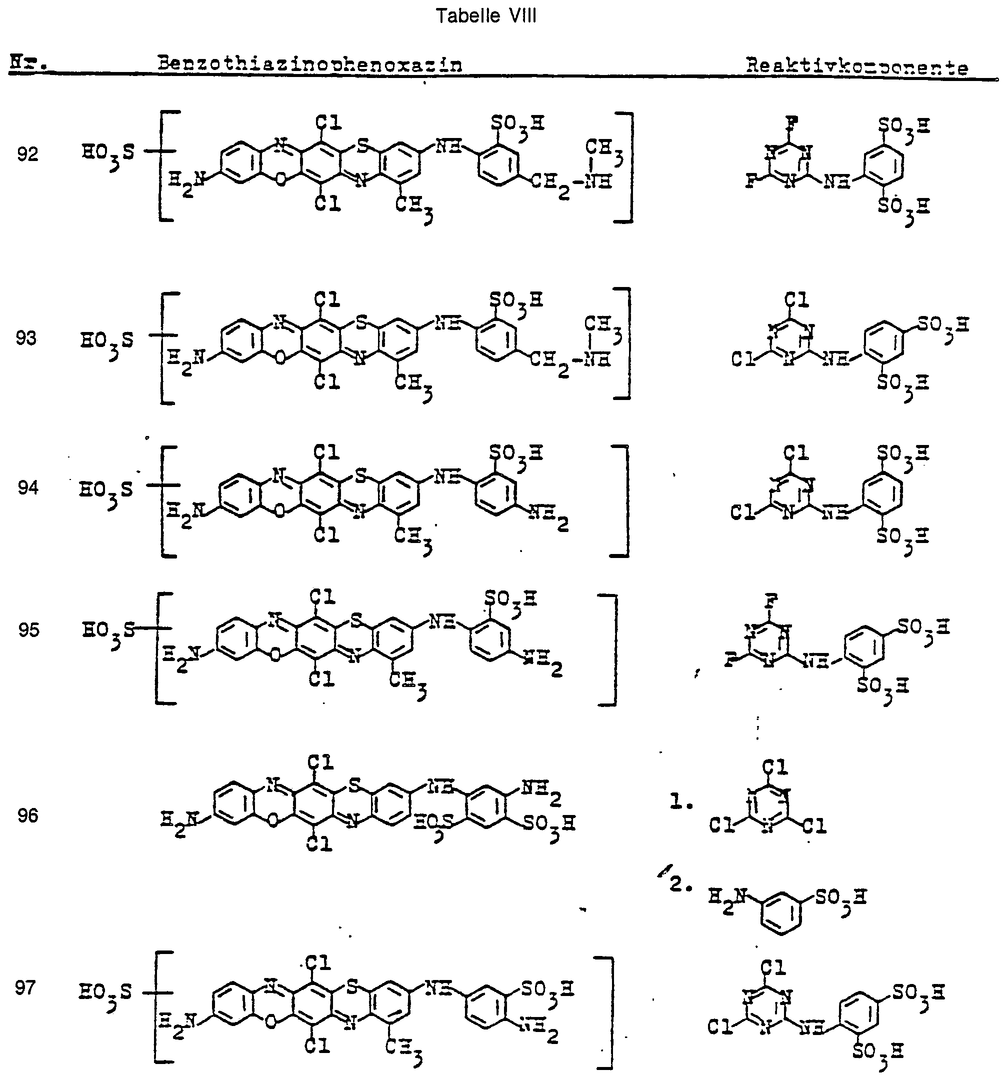

## Patentansprüche

1. Farbstoffe der Formeln 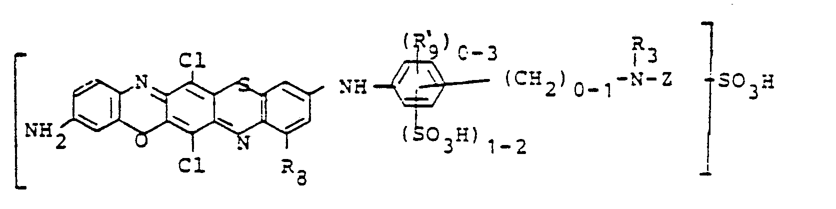 (Fortsetzung) 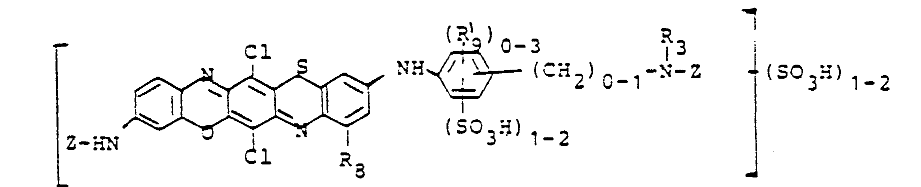 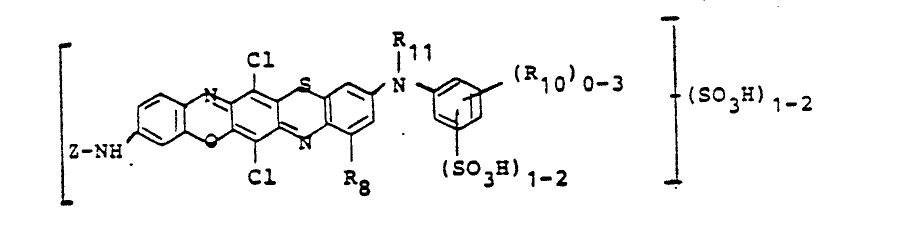 worin
Z = faserreaktiver Rest
R₃ = H, Alkyl
R₈ = H, C₁-C₄-Alkyl, C₁-C₄-Alkoxy, F, Cl, Br
R'₉ = H, CH₃
R₁₀ = C₁-C₄-Alkyl, C₁-C₄-Alkoxy, C₁-C₄-Alkylcarbonylamino, F, Cl, Br
R₁₁ = H, C₁-C₄-Alkyl, gegebenenfalls substituiert durch OH oder OSO₃H.

2. Verwendung der Farbstoffe des Anspruchs 1 zum Färben und Bedrucken von hydroxylgruppenhaltigen und amidgruppenhaltigen Materialien.

## Claims

1. Dyestuffs of the formulae 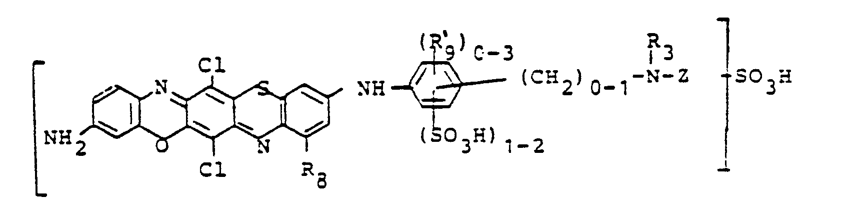 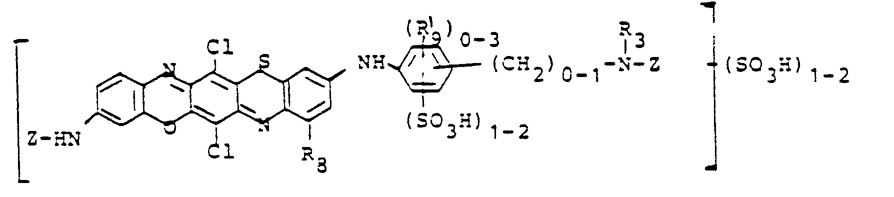 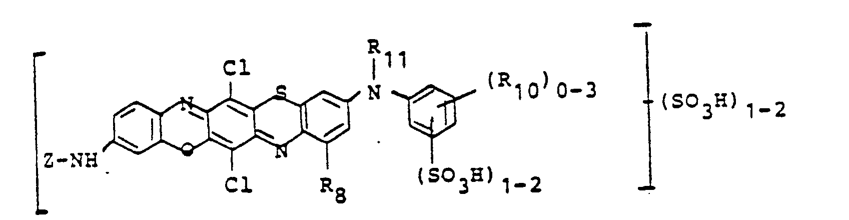 wherein
Z = a fibre-reactive radical,
R₃ = H or alkyl,
R₈ = H, C₁-C₄-alkyl, C₁-C₄-alkoxy, F, Cl or Br,
R'₉ = H or CH₃,
R₁₀ = C₁-C₄-alkyl, C₁-C₄-alkoxy, C₁-C₄-alkylcarbonylamino, F, Cl or Br, and
R₁₁ = H or C₁-C₄-alkyl, optionally substituted by OH or OS0₃H.

2. Use of the dyestuffs of Claim 1 for dyeing and printing hydroxyl-group-containing and amide- group-containing materials.

## Revendications

1. Colorants de formules 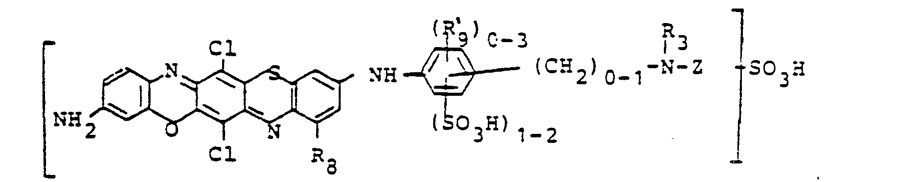 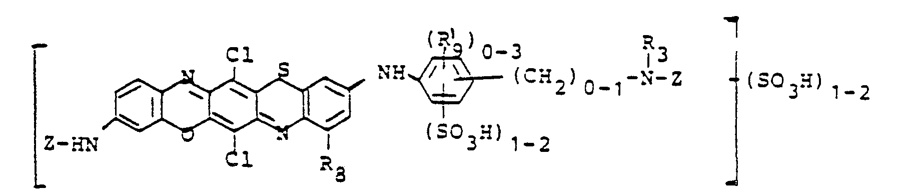 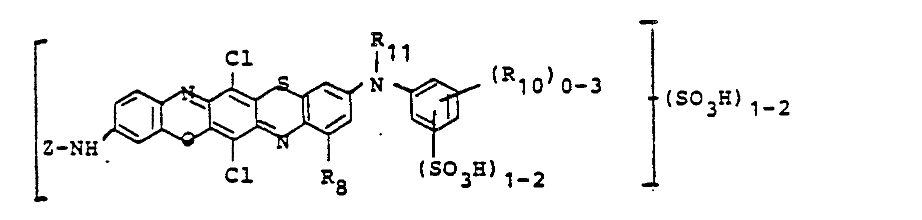 dans lesquelles
Z = reste réactif avec les fibres,
R₃ = H, alkyle,
R₈ = H, alkyle en C₁-C₄, alcoxy en C₁-C₄, F, Cl, Br,
R'_{9 =} H, CH₃,
R₁₀ = alkyle en C₁-C₄, alcoxy en C₁-C₄, (alkyle en C₁-C₄)-carbonylamino, F, Cl, Br,
R₁₁ = H, alkyle en C₁-C₄, éventuellement substitué par OH ou OSO₃H.

2. Utilisation des colorants de la revendication 1, pour la teinture et l'impression de matières contenant des groupes hydroxy et des groupes amide.
